# EUROPEAN PATENT APPLICATION

(11) **EP 4 711 633 A1**
(43) Date of publication of application: **18.03.2026**
(21) Application number: 23937592.6
(22) Date of filing: 15.05.2023
(51) Int. Cl.: F16C 17/04, F16C 32/06, F04D 29/057, F04D 29/58, F25B 1/053, F25B 31/00

(54) **AXIAL BEARING, TURBO COMPRESSOR USING SAME, AND REFRIGERATION CYCLE APPARATUS HAVING SAME**

(71) Applicant: LG Electronics Inc., Yeongdeungpo-gu Seoul 07336 (KR)
(72) Inventor: YI, Howon, Seoul 08592 (KR); MOON, Changgook, Seoul 08592 (KR); OH, Junchul, Seoul 08592 (KR)
(74) Representative: Vossius & Partner Patentanwälte Rechtsanwälte mbB
(86) International application number: PCT/KR2023/006559
(87) International publication number: WO 2024/237360

(57) **Abstract**

Disclosed are an axial bearing, a turbo compressor using same, and a refrigeration cycle apparatus having same. The axial bearing, the turbo compressor using same, and the refrigeration cycle apparatus having same comprise an axial bearing comprising a bearing support member, a bearing plate, and a foil, wherein the bearing plate has at least one orifice for supporting a rotary shaft in the axial direction by spraying a fluid toward a thrust runner, and a foil, for supporting the rotary shaft in the axial direction by means of dynamic pressure generated when the rotary shaft rotates, may be provided on the outer or inner side of the orifice in the radial direction. Accordingly, friction loss between the thrust runner and the axial bearing at an early stage of an operation and/or during an overload operation can be suppressed, and at the same time, reliability and efficiency of the compressor and/or the refrigeration cycle apparatus, comprising the axial bearing can be increased during a normal operation and/or a low load operation.

## Description

### Technical Field

The disclosure relates to a hybrid axial bearing, a turbo compressor using the same, and a refrigeration cycle apparatus having the same.

### Background Art

In general, compressors may be largely divided into a positive displacement compressor and a turbo compressor. The positive displacement compressor is of a type, such as a reciprocating type or a rotary type, in which a fluid is sucked, compressed, and then discharged using a piston or a vane. On the other hand, the turbo compressor is of a type in which a fluid is sucked, compressed, and then discharged using a rotary element.

The positive displacement compressor determines a compression ratio by appropriately adjusting a ratio of discharge volume to suction volume so as to obtain a desired discharge compressor. Therefore, the positive displacement compressor is limited in decreasing the total size thereof as compared with the capacity thereof.

The turbo compressor is similar to a turbo blower, but has a high discharge pressure and a low flow rate as compared with the turbo blower. The turbo compressor increases the pressure of a continuously flowing fluid, and may be classified into an axial flow type in a case where the fluid flows in an axial direction and a centrifugal type in a case where the fluid flows in a radial direction.

Meanwhile, unlike the positive displacement compressor such as a reciprocating compressor or a rotary compressor, it is difficult for the turbo compressor to obtain a desired high pressure ratio through only one compression due to several factors including processability, mass productivity, durability, and the like even when the wing shape of a rotating impeller is designed optimally. Hence, a multi-stage turbo compressor including a plurality of impellers in an axial direction to compress a fluid in multiple stages is known.

As for the multi-stage turbo compressor, a method is known in which a plurality of impellers are installed on a rotary shaft at one side of a rotor or are installed on both ends of the rotary shaft with the rotor interposed therebetween while facing each other so as to compress a fluid in multiple stages. For convenience, the former may be referred to as a one-side type, and the latter may be referred to as a both-end type.

In a one-side type turbo compressor, a pipe or fluid flow path connecting a plurality of impellers is shortened, thereby suppressing deterioration of compressor efficiency. However, in the one-side type turbo compressor, since thrust directions of both impellers are the same, axial shaking increases to that extent, and therefore, the total size of the compressor may be increased as the size of a thrust bearing is increased. In addition, as a load applied to a driving unit during a high speed operation increases, the driving unit may be broken.

In a both-end type turbo compressor, since thrust directions of both impellers are opposite to each other, axial shaking can be suppressed to a certain extent, and thus the size of a thrust bearing is reduced, thereby improving motor efficiency. However, in the case of the both-end type turbo compressor, a complex and long pipe or fluid flow path is required to connect a plurality of impellers, and therefore, the structure of the compressor may become complicated. In addition, pressure loss occurs in a process in which a fluid compressed in one impeller moves to the other impeller through a long flow path, and therefore, compressor efficiency may be deteriorated.

Patent Document 1 (U.S. Registered Patent No. US5857348 B, Registration Date: 1999. 01. 12) discloses an example of a both-end type turbo compressor. In the both-end type turbo compressor disclosed in Patent Document 1, a first impeller constituting a 1-stage compression unit (hereinafter, referred to as a first compression unit) is arranged on one side of a rotary shaft, a second impeller constituting a 2-stage compression unit (hereinafter, referred to as a second compression unit) is arranged on the other side of the rotary shaft, and an exit of the first compression unit and an entrance of the second compression unit are connected to each other by a communication pipe.

Patent Document 2 (U.S. Registered Patent No. US8931304 B2, Registration Date: 2015. 01. 13) discloses a both-end type turbo compressor. In the both-end type turbo compressor disclosed in Patent Document 2, a refrigerant flow path is disclosed through which a 1-stage compressed refrigerant in a first compression unit is guided into a motor chamber and then sucked into a second compression unit after a driving motor and a bearing are cooled using the 1-stage compressed refrigerant guided to the motor chamber.

In the both-sides type turbo compressor described above, an axial bearing is arranged on both end sides or one end side of a rotary shaft with respect to a driving unit. As an ordinary turbo compressor including the both-end type turbo compressor rotates at a high speed (e.g., 40,000 rpm or more), it is advantageous in terms of compressor efficiency to quickly dissipate motor heat generated in the driving unit and frictional heat generated in the axial bearing supporting the rotary shaft. Hence, an axial bearing configured as a magnetic or foil bearing is applied in Patent Document 1.

Patent Document 3 (Korean Registered Patent No. 10-1036790, Registration Date: 2011. 05. 18) discloses a hybrid axial bearing not only using a foil bearing but also using a permanent magnet and an electromagnet. In Patent Document 3, the axial direction of a rotary shaft is supported as the magnetic force of the electromagnet constituting the axial bearing is adjusted according to an operation state. Accordingly, the rotary shaft can be stably supported as compared with other patent documents in which a single type bearing such as a foil bearing is provided.

However, in the conventional hybrid axial bearing using the permanent magnet and the electromagnet as described above, as an expensive permanent magnet and an expensive electromagnet are used, material cost and the number of components increase, and therefore, mass productivity may be deteriorated. As a result, manufacturing cost may be increased.

In addition, in the conventional hybrid axial bearing, the permanent magnet and/or the electromagnet may be separated due to collision with a thrust runner during restart and/or abnormal behavior of a compressor using the axial bearing, and therefore, the reliability and/or efficiency of the compressor using the axial bearing may be deteriorated as the reliability of the axial bearing is deteriorated.

### Disclosure of Invention

### Technical Problem

Therefore, to obviate those problems, an aspect of the detailed description is to provide an axial bearing, a turbo compressor using the same, and a refrigeration cycle apparatus having the same, which can stably support the axial direction of a rotary shaft during restart and/or a normal operation of the compressor, using a static pressure bearing and a dynamic pressure bearing.

Another aspect of the detailed description is to provide a hybrid axial bearing, a turbo compressor using the same, and a refrigeration cycle apparatus having the same, which can decrease the number of components constituting the axial bearing including a static pressure bearing and a dynamic pressure bearing, thereby reducing manufacturing cost.

Still another aspect of the detailed description is to provide a hybrid axial bearing, a turbo compressor using the same, and a refrigeration cycle apparatus having the same, which can modulize a static pressure bearing and a dynamic pressure bearing, thereby simplifying assembly and improving reliability.

Still another aspect of the detailed description is to provide a hybrid axial bearing, a turbo compressor using the same, and a refrigeration cycle apparatus having the same, which can control a static pressure bearing and a dynamic pressure bearing to be appropriately selected according to an operation state of the compressor, thereby improving the efficiency of the refrigeration cycle apparatus including the compressor.

### Solution to Problem

To achieve these and other advantages and in accordance with the purpose of the disclosure, as embodied and broadly described herein, there is provided an axial bearing including a bearing support member, a bearing plate, and at least one foil. The bearing support member may be spaced apart from at least one of both axial side surfaces of a thrust runner arranged on a rotary shaft. The bearing plate may be arranged on the bearing support member to face the side surface of the thrust runner in an axial direction, and may include at least one orifice through which a fluid is sprayed toward the side surface of the thrust runner to support the rotary shaft in the axial direction. The at least one foil may be arranged on the bearing support member or the bearing plate to face the side surface of the thrust runner in the axial direction, and may support the rotary shaft in the axial direction by means of a dynamic pressure generated in rotation of the rotary shaft. The orifice may be located outwardly or inwardly of the foil in a radial direction. Accordingly, friction loss between the thrust runner the axial bearing facing the same at an early stage of an operation and/or during an overload operation can be suppressed, and the reliability of the axial bearing during a normal operation and/or a low load operation can be improved.

In an example, a foil accommodation groove having the foil accommodated therein may be formed in an annular shape in a side surface of the bearing plate facing the thrust runner, and a bearing accommodation groove having the bearing plate accommodated therein may be formed in an annular shape in the bearing support member. The foil accommodation groove may be formed in at least one of an inner circumferential side and an outer circumferential side of the bearing accommodation groove. Accordingly, the axial direction of the rotary shaft can be stably supported using a static pressure bearing and/or a dynamic pressure bearing, and a hybrid axial bearing can be simplified by modulizing the static pressure bearing and the dynamic pressure bearing.

In another example, a bearing accommodation groove having the bearing plate accommodated therein may be formed in an annular shape in the bearing support member. A fluid flow path groove forming an internal path along with the bearing accommodation groove may be formed in an annular shape in at least one of a side surface of the bearing support member and a side surface of the bearing plate, which faces the side surface of the bearing support member. Accordingly, the pressure of the fluid sprayed through the orifice is equally distributed along a circumferential direction, so that the rotary shaft can be more stably supported.

For example, a fluid connection hole passing through an inner circumferential surface of the bearing accommodation groove from an outer circumferential surface of the bearing support member may be formed in the bearing support member. A fluid injection hole passing through an inner circumferential surface of the fluid flow path groove from an outer circumferential surface of the bearing plate may be formed in the bearing plate. The fluid connection hole and the fluid injection hole may communicate with each other. Accordingly, a flow path through which an external fluid is guided to the internal path can be simplified, and the external fluid can be quickly supplied to the internal path.

Specifically, a total cross-sectional area of the fluid injection hole may be formed larger than or equal to a total cross-sectional area of the orifice. Accordingly, the fluid to be sprayed through the orifice can be sufficiently supplied.

In still another example, an annular internal path through which a fluid supplied from an outside is circulated may be formed between the bearing support member and the bearing plate. The orifice may pass through the internal path in the axial direction toward the thrust runner. Accordingly, as the fluid supplied to the internal path is sprayed toward the thrust runner through the orifice, the axial direction of the rotary shaft can be stably supported.

For example, the orifice may be provided in plurality at a predetermined interval along a circumferential direction. The plurality of orifices may be formed at equidistant intervals along the circumferential direction. Accordingly, the pressure of the fluid sprayed toward the thrust runner can be equally distributed along the circumferential direction, and thus the axial direction of the rotary shaft can be stably supported to that extent.

In addition, the orifice may be provided in plurality at a predetermined interval along a circumferential direction. The plurality of orifices may be formed to have a same cross-sectional area along the circumferential direction. Accordingly, the pressure of the fluid sprayed toward thrust runner can be equally distributed along the circumferential direction, and the plurality of orifices can be easily formed.

In still another example, at least one orifice accommodation groove accommodating the orifice and recessed by a predetermined depth may be formed in a side surface of the bearing plate facing the thrust runner. Accordingly, as the refrigerant sprayed through the orifice is widely diffused in the orifice accommodation groove, a bearing surface can be enlarged.

For example, the orifice may be formed in a geometric center of the orifice accommodation groove. Accordingly, a distance from the orifice to an inner circumferential surface of the orifice accommodation groove is formed symmetrically with respect to the orifice, a bearing force in the orifice accommodation groove can be equally formed.

In addition, the orifice accommodation groove may be provided in plurality at a predetermined interval along a circumferential direction. The plurality of orifice accommodation grooves adjacent to each other in the circumferential direction may be separated from each other. Accordingly, as the area of the orifice accommodation groove is optimized, a bearing area in each orifice accommodation groove can be widened, and an appropriate bearing force in the orifice accommodation groove can be secured.

In addition, the orifice accommodation groove may be formed in plurality at a predetermined interval along a circumferential direction. Communication grooves through which the plurality of orifice accommodation grooves adjacent to each other in the circumferential direction communicate with each other may be formed between the orifice accommodation grooves, respectively. Accordingly, although some orifices are blocked, the fluid sprayed through other orifices adjacent to the some orifices is introduced into the orifice accommodation groove accommodating the block orifices through the communication grooves, so that the bearing force can be entirely equally formed.

In addition, the orifice accommodation groove may extend along a circumferential direction to be formed in an annular shape. Accordingly, as the orifice accommodation groove is formed through single processing, the orifice accommodation groove can be easily processed.

In still another example, the bearing plate may be formed as a single body. Accordingly, the bearing plate can be easily manufactured and assembled.

In still another example, the bearing plate may include an annular tilting plate, and a plurality of tilting pads arranged along a circumferential direction on the tilting plate to be rotatable with respect to the tilting plate. Accordingly, although the thrust runner and the bearing plate are in contact with each other, the tilting pads constituting the bearing plate rotate with respect to the tilting plate, so that friction loss between the thrust runner and the bearing plate can be suppressed
For example, the tilting pad may include a pad portion facing the thrust runner of the rotary shaft, and a pivot portion extending toward the bearing plate from the pad portion and forming a rotation center of the pad portion. Accordingly, the tilting pads rotating with respect to the thrust runner can be easily formed.

Specifically, the orifice may be formed by passing through the pivot portion in the axial direction. Accordingly, the tilting pads can be arranged to rotate with respect to the tilting plate, and the orifice can continuously communicate with the internal path.

To achieve these and other advantages and in accordance with the purpose of the disclosure, as embodied and broadly described herein, there is provided a turbo compressor including a housing, a driving motor, a rotary shaft, an impeller, a thrust runner, and an axial bearing including a static pressure bearing portion and a dynamic pressure bearing portion. The housing may include a motor chamber. The driving motor may be arranged in the motor chamber of the housing to generate a rotational force. The rotary shaft may transfer the rotational force of the driving motor. The impeller may be coupled to the rotary shaft to suck and compress a refrigerant while rotating. The thrust runner may extend from an outer circumferential surface of the rotary shaft. The axial bearing may be arranged on one axial side of the thrust runner to support the thrust runner in an axial direction. The static pressure bearing portion of the axial bearing may be arranged to face the thrust runner of the rotary shaft and may support the rotary shaft in the axial direction by means of a static pressure by spraying the refrigerant toward the thrust runner. The dynamic pressure bearing portion of the axial bearing may be arranged on at least one of an inner circumferential side and an outer circumferential side of the static pressure bearing portion to face the thrust runner and may support the rotary shaft in the axial direction by means of a dynamic pressure generated in rotation of the rotary shaft. Accordingly, friction loss between the thrust runner and the axial bearing facing the same at an early stage of an operation of the compressor and/or during an overload operation of the compressor can be suppressed, and the reliability of the axial bearing during a normal operation and/or a low load operation of the compressor can be improved, thereby improving the efficiency of the compressor.

In an example, the static pressure bearing portion may include a bearing support member fixed to the housing, and a bearing plate arranged on one side surface of the bearing support member facing the thrust runner of the rotary shaft. At least one orifice may be formed in the bearing plate such that the refrigerant supplied through an internal path located between the bearing plate and the bearing support member is sprayed toward the thrust runner. Accordingly, as static pressure is formed using a high-pressure refrigerant in a state in which dynamic pressure is not formed, the axial direction of the rotary shaft can be supported.

In another example, the dynamic pressure bearing portion may be arranged on one radial side surface of the static pressure bearing portion facing the thrust runner of the rotary shaft. Accordingly, the hybrid axial bearing can be easily formed by modulizing the static pressure bearing portion and the dynamic pressure bearing portion, and the axial direction of the rotary shaft can be stably supported according to an operation state of the compressor.

To achieve these and other advantages and in accordance with the purpose of the disclosure, as embodied and broadly described herein, there is provided a refrigeration cycle apparatus including a compressor, a condenser, an expander, and an evaporator. The condenser may be connected to a discharge side of the compressor. The expander may be connected to an exit side of the condenser. The evaporator may have an entrance connected to an exit side of the expander and an exit connected to a suction side of the compressor. The compressor may include the turbo compressor described above. Accordingly, friction loss between the thrust runner and the axial bearing facing the same at an early stage of an operation of the refrigeration cycle apparatus and/or during an overload operation of the refrigeration cycle apparatus can be suppressed, and the reliability of the axial bearing during a normal operation and/or a low load operation of the refrigeration cycle apparatus can be improved, thereby improving the efficiency of the refrigeration cycle apparatus.

In an example, a refrigerant supply unit guiding a refrigerant to the static pressure bearing portion may be formed in the compressor. The refrigerant supply unit may be connected between an exit of the condenser and an entrance of the expander through a refrigerant supply pipe. Accordingly, as the axial bearing supporting the axial direction of the rotary shaft, using the refrigerant circulating in the refrigeration cycle apparatus, manufacturing cost of the axial bearing can be reduced, and the reliability of the axial bearing can be improved.

For example, a refrigerant control valve opening/closing of the refrigerant supply pipe may be arranged in the refrigerant supply pipe and may be electrically connected to a valve control unit controlling opening/closing of the refrigerant control valve. The valve control unit may open the refrigerant supply pipe in a high load condition and may block the refrigerant supply pipe in a low load condition. Accordingly, the axial bearing supporting the axial direction of the rotary shaft can be selected according to an operation state of the compressor and/or the refrigeration cycle apparatus, so that the axial direction of the rotary shaft can be stably supported and the friction loss can be reduced, thereby improving the efficiency of the refrigeration cycle apparatus.

Specifically, a refrigerant storage container storing the refrigerant may be arranged in the middle of the refrigerant supply pipe, and the refrigerant control valve may be arranged at an exit of the refrigerant storage container connected to the refrigerant supply unit. Accordingly, as the refrigerant control valve is open/closed according to an operation state of the compressor and/or the refrigeration cycle apparatus, the refrigerant can be stored in the refrigerant storage container, or the refrigerant stored in the refrigerant storage container can be quickly supplied to a refrigerant flow path.

More specifically, a refrigerant heating member may be arranged on an outer circumferential surface of the refrigerant storage container to heat the refrigerant stored in the refrigerant storage container. Accordingly, the refrigerant stored in the refrigerant storage container is heated by an appropriate temperature by the refrigerant heating member, thereby maintaining an appropriate pressure.

### Advantageous Effects of Invention

In the present disclosure, at least one orifice supporting the rotary shaft in the axial direction by spraying a fluid toward a side surface of the thrust runner may be arranged in the bearing plate, and a foil supporting the rotary shaft in the axial direction by means of a dynamic pressure generated in rotation of the rotary shaft may be arranged at a radial outer side or a radial inner side of the orifice. Accordingly, friction loss between the thrust runner and the axial bearing in contact therewith at an early stage of an operation and/or during an overload operation can be suppressed, and the reliability of the axial bearing during a normal operation and/or a low load operation can be improved.

In the present disclosure, a foil accommodation may be formed in at least one of an inner circumferential side and an outer circumferential side of the bearing accommodation groove. Accordingly, the axial direction of the rotary shaft can be stably supported using a static pressure bearing and/or a dynamic pressure bearing, and a hybrid axial bearing can be simplified by modulizing the static pressure bearing and the dynamic pressure bearing.

In the present disclosure, a fluid flow path groove forming an internal path along with the bearing accommodation groove may be formed in an annular shape in a side surface of the bearing plate facing the bearing support member. Accordingly, the pressure of the fluid sprayed through the orifice is equally distributed along the circumferential direction, so that the rotary shaft can be more stably supported.

In the present disclosure, the orifice may pass through the internal path toward the thrust runner in the axial direction. Accordingly, as the fluid supplied to the internal path is sprayed toward the thrust runner through the orifice, the axial direction of the rotary shaft can be stably supported.

In the present disclosure, at least one orifice accommodation groove accommodating the orifice and recessed by a predetermined depth may be formed in the side surface of the bearing plate facing the thrust runner. Accordingly, as a refrigerant sprayed through the orifice is widely diffused in the orifice accommodation groove, a bearing area can be enlarged.

In the present disclosure, the bearing plate may include an annular tilting plate and a plurality of tilting pads arranged on the tilting plate along the circumferential direction to be rotatable with respect to the tilting plate. Accordingly, although the thrust runner and the bearing plate are in contact with each other, the tilting pads constituting the bearing plate rotates with respect to the tilting plate, so that friction loss between the thrust runner and the bearing plate can be suppressed.

In the present disclosure, a refrigerant storage container storing the refrigerant may be arranged in the middle of the refrigerant supply pipe, and a refrigerant control valve may be arranged at an exit of the refrigerant storage container connected to the refrigerant supply unit. Accordingly, as the refrigerant control value is open/closed according to an operation state of the compressor and/or the refrigeration cycle apparatus, the refrigerant can be stored in the refrigerant storage container, or the refrigerant stored in the refrigerant storage container can be quickly supplied to a refrigerant flow path.

### Brief Description of Drawings

FIG. 1 is a system diagram showing a refrigeration cycle apparatus including a turbo compressor according to an embodiment.
FIG. 2 is an exploded perspective view showing the turbo compressor according to this embodiment.
FIG. 3 is a broken perspective view showing an interior of the turbo compressor according to FIG. 2.
FIG. 4 is a cross-sectional view showing an interior of the turbo compressor according to FIG. 3.
FIG. 5 is an enlarged cross-sectional view showing a first bearing portion in FIG. 4.
FIG. 6 is an exploded perspective view showing an axial bearing according to this embodiment.
FIG. 7 is a perspective view showing a portion of the axial bearing in FIG. 6, which is viewed from an opposite side.
FIG. 8 is an assembled plan view showing the axial bearing according to FIG. 6.
FIG. 9 is a cross-sectional view taken along line "IX-IX" of FIG. 8.
FIGS. 10 and 11 are plan views showing other embodiments of an orifice accommodation groove in FIG. 6.
FIGS. 12A and 12B are schematic views illustrating an operation of the axial bearing according to an operation state in the turbo compressor according to this embodiment.
FIG. 13 is an exploded perspective view showing another embodiment of the axial bearing.
FIG. 14 is an assembled plan view showing the axial bearing according to FIG. 13.
FIG. 15 is a cross-sectional view taken along line "X-X" of FIG. 14.
FIG. 16 is an exploded perspective view showing still another embodiment of the axial bearing.
FIG. 17 is an assembled plan view showing the axial bearing according to FIG. 16.
FIG. 18 is a cross-sectional view taken along line "XI-XI" of FIG. 17.
FIG. 19 is a schematic view showing illustrating an operation of a tilting pad in FIG. 18.
FIG. 20 is a system diagram showing another embodiment of the refrigeration cycle apparatus including the turbo compressor.

### Best Mode

Hereinafter, a hybrid thrust bearing, a turbo compressor having the same, and a refrigeration cycle apparatus having the same according to the present disclosure will be described in detail with reference to an embodiment shown in the accompanying drawings. In this embodiment, a both-end type and multi-stage type turbo compressor in which a first impeller and a second impeller are installed on both ends of a rotary shaft, and an exit of a first compression unit including the first impeller is connected to an entrance of a second compression unit including the second impeller is described as an example, but the present disclosure is not necessarily limited thereto. For example, a thrust bearing to be described later may be equally applied even to a one-side type turbo compressor including at least one impeller.

In addition, an example in which the turbo compressor according to this embodiment is applied to a chiller system that supplies cold water to a source of demand is mainly described, but its application range is not necessarily limited to only the chiller system. For example, the turbo compressor according to this embodiment may be equally applied to a refrigeration cycle system using a refrigerant.

In addition, in the turbo compressor according to this embodiment, a length direction of the rotary shaft is defined as an axial direction and a thickness direction of the rotary shaft is defined as a radial direction, a suction side of each impeller (or compression unit) on an axial line is defined as a front side and a discharge side of each impeller is defined as a rear side, and a front side surface is defined as a first side surface and a rear side surface is defined as a second side surface.

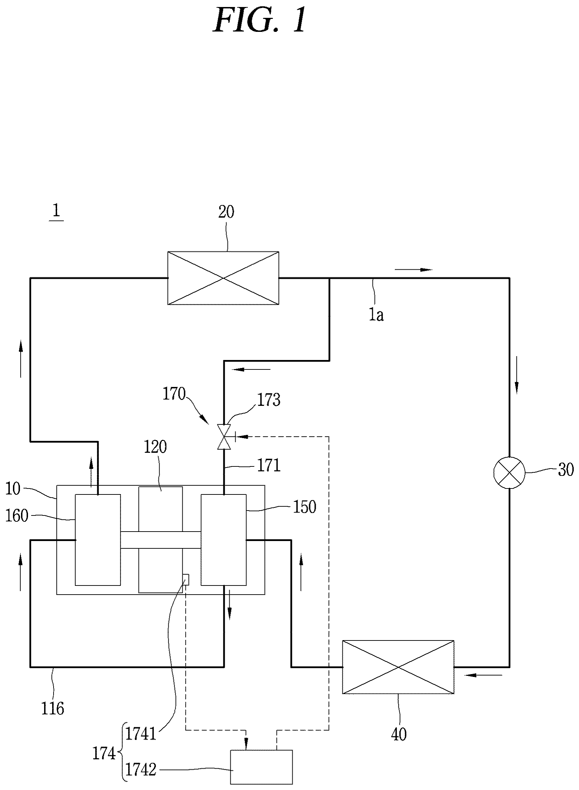

FIG. 1 is a system diagram showing a refrigeration cycle apparatus including a turbo compressor according to an embodiment.

Referring to FIG. 1, the refrigeration cycle apparatus using the turbo compressor according to this embodiment is configured such that a compressor 10, a condenser 20, an expander 30, and an evaporator 40 form a closed loop. That is, the condenser 20, the expander 30, and the evaporator 40 are sequentially connected to a discharge side of the compressor 10, and an exit of the evaporator 40 is connected to a suction side of the compressor 10. Therefore, a series of processes is repeated in which a refrigerant compressed in the compressor 10 is discharged toward the condenser 20, and the compressed refrigerant is again sucked into the compressor 10 by sequentially passing through the condenser 20, the expander 30, and the evaporator 40.

However, an exit of the condenser 20 may branch off such that a first pipe is connected to an entrance side of the expander 30 and a second pipe is connected to a refrigerant supply pipe 171 of a refrigerant supply unit 170 to be described later. Therefore, a high-temperature and high-pressure liquid refrigerant passing through the condenser 20 may be introduced into the compressor 10 to refrigerate an internal space of the compressor 10 including a bearing unit 140 and may form static pressure bearing portions 145 and 146 constituting the bearing unit 140. This will be again described later with reference the bearing unit 140 and/or the refrigerant supply unit 170.

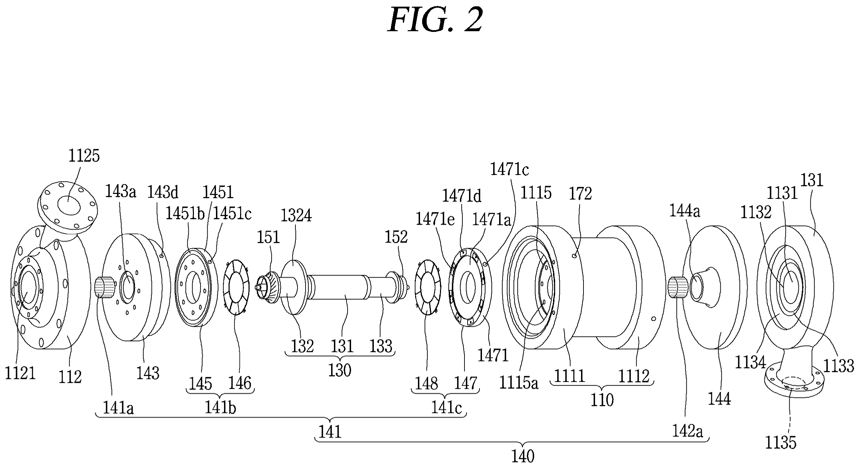

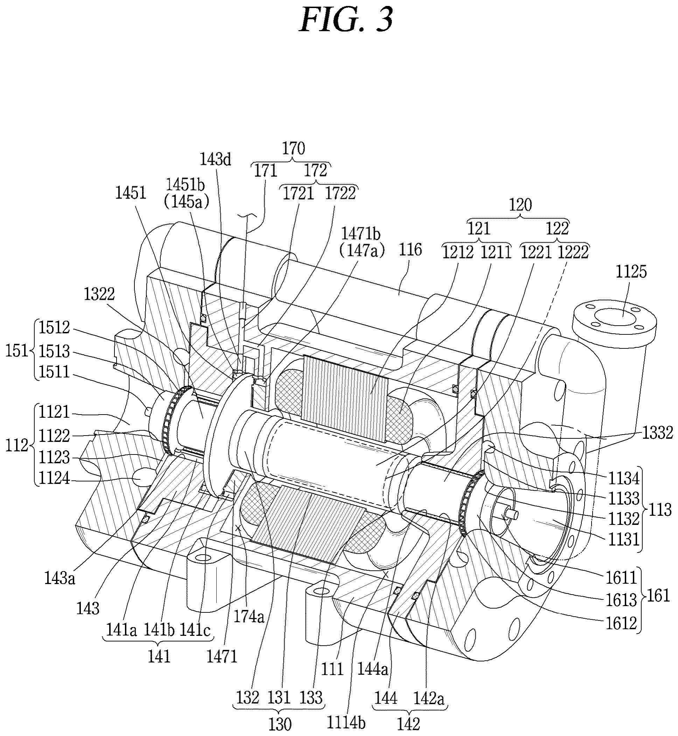

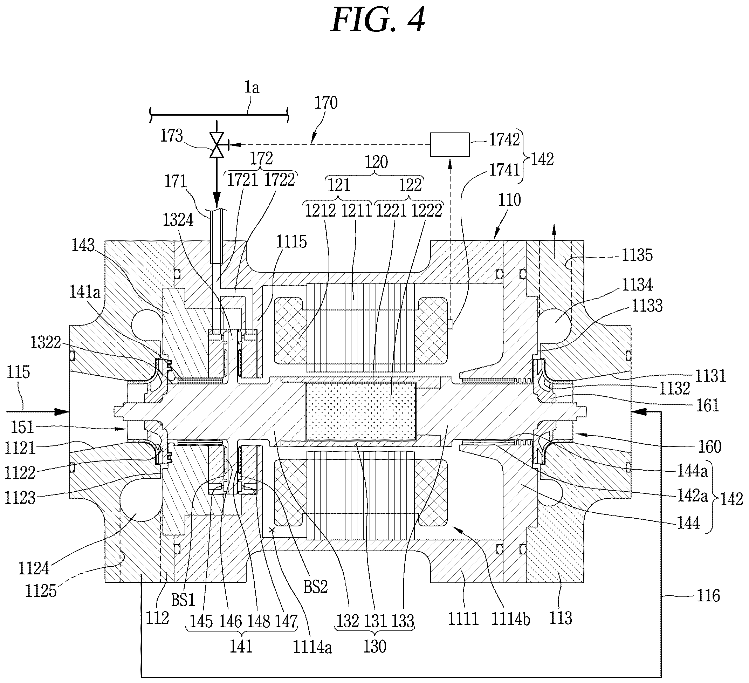

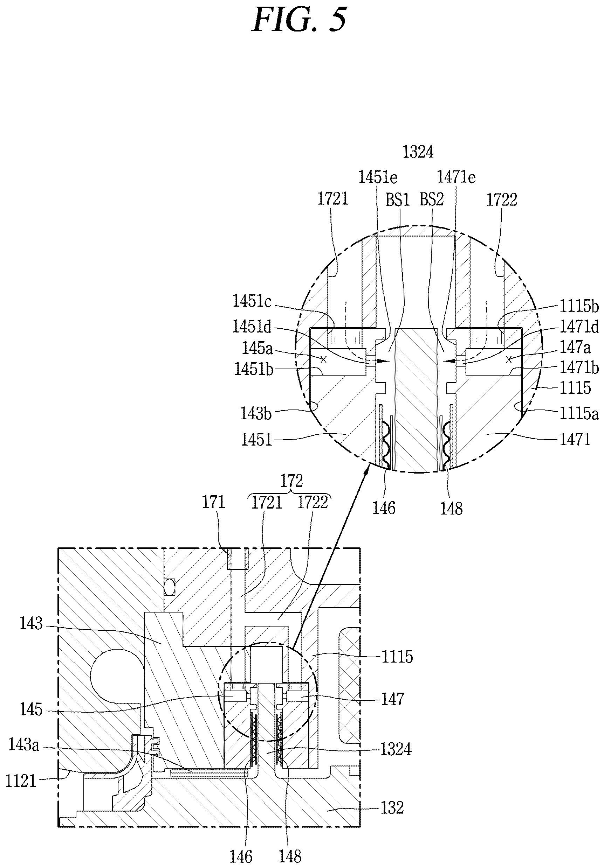

FIG. 2 is an exploded perspective view showing the turbo compressor according to this embodiment. FIG. 3 is a broken perspective view showing an interior of the turbo compressor according to FIG. 2. FIG. 4 is a cross-sectional view showing an interior of the turbo compressor according to FIG. 3. FIG. 5 is an enlarged cross-sectional view showing a first bearing portion in FIG. 4.

Referring to these drawings, the turb compressor 10 according to this embodiment may include a housing 110, an electric unit 120 constituting a driving motor, a rotary shaft 130, the bearing unit 140, a first compression unit (1-stage compression unit) 150, a second compression unit (2-stage compression unit) 160, and the refrigerant supply unit 170.

The housing 110 according to this embodiment forms an appearance of the turbo compressor 10, and may include a motor housing 111, a first impeller housing 112, and a second impeller housing 113.

The motor housing 111 may be formed in a cylindrical shape having both open axial ends. However, a first flange portion 1111 and a second flange portion 1112, which extend in the radial direction to be fastened to the first impeller housing 112 and the second impeller housing 113, which will be described later, may be formed on both ends of the motor housing 111, respectively.

A motor chamber 1114 may be formed inside the motor housing 111. A stator 121 to be described later may be shrink-fitted in the middle of the motor chamber 1114 to be press-fitted into the motor chamber 1114. Therefore, the motor chamber 1114 may be partitioned into a first chamber 1114a which is a side of the first compression unit 150 and a second chamber 1114b which is a side of the second compression unit 160 with respect to the stator 121 to be described later.

A bearing support portion 1115 constituting a portion of a first bearing portion 141 to be described later may be formed in the middle of the first chamber 1114a. The bearing support portion 1115 may extend in the radial direction toward the rotary shaft 130 from an inner circumferential surface of the motor housing 111, forming the first chamber 1114a. However, the bearing support portion 1115 may be press-fitted to the inner circumferential surface of the motor housing 111 or may be fastened to the inner circumferential surface of the motor housing 111, using a fastening member (no reference numeral). In this embodiment, an example is illustrated in which the bearing support portion 1115 extends as a single body from the inner circumferential surface of the motor housing 111.

The second chamber 1114b may substantially communicate with the first chamber 1114a as described above. However, a separate refrigerant connection pipe (not shown) may be connected to the motor housing 111 forming the second chamber 1114b. The refrigerant connection pipe may be joined with the refrigerant supply pipe 171 to be connected to an exit side of the condenser 20. Therefore, a portion of the liquid refrigerant passing through the condenser 20 may be introduced into the second chamber 1114b, and the liquid refrigerant may be introduced into a second radial bearing 142a communicating with the second chamber 1114b. Accordingly, the liquid refrigerant which is the working fluid supports a bump foil constituting the second radial bearing 142a, thereby securing a bearing force against a second compression unit-side end portion of the rotary shaft 130 and refrigerating the second radial bearing 142a and the rotary shaft 130 facing the same.

Referring to FIGS. 2 to 4, the first impeller housing 112 may include a first suction port 1121, a first impeller accommodation portion 1122, a first diffuser 1123, a first volute 1124, and a first discharge port 1125.

The first suction port 1121 may be formed in a direction passing through both axial side surfaces from a central portion of the first impeller housing 112. For example, the first suction port 1121 may be open in a front surface (a first side surface) of the first impeller housing 112 to extend in the axial direction. An entrance end of the first suction port 1121, to which a refrigerant suction pipe 115 is connected, may be wide, and an exit end of the first suction port 1121, to which the first impeller accommodation portion 1122 is connected, may be formed in a narrow truncated conical shape. Accordingly, the flow rate and flow velocity of the refrigerant sucked through the first suction port 1121 can be increased.

The first impeller accommodation portion 1122 may extend toward an outer circumferential surface of a first impeller 151 from the exit end of the first suction port 1121, and the first impeller 151 may be rotatably inserted into the first impeller accommodation portion 1122. Therefore, the first impeller accommodation portion 1122 may be defined as a first fixed-side shroud, and an inner circumferential surface of the first impeller accommodation portion 1122 may be formed to be curved along the shape of an outer surface of the first impeller 151.

The first diffuser 1123 may extend from a downstream-side end of the first impeller accommodation portion 1122. For example, the first diffuser 1123 may be formed as a space between a first side surface (no reference numeral) of a first bearing shell 143, which faces a first side surface 1324a of a thrust runner 1324 to be described later, and a second side surface (no reference numeral) of the first impeller housing 112, which faces the first side surface of the first bearing shell 143.

The first volute 1124 may be formed to be connected to a downstream side of the first diffuser 1123. For example, the first volute 1124 may be formed to be recessed in an axial rear surface of the first impeller housing 112. The first volute 1124 is formed in a ring shape to surround an outer circumferential side of the first diffuser 1123, and may be formed such that the cross-sectional area thereof gradually increases toward the first discharge port 1125 to be described later.

The first discharge port 1125 may be formed to pass through an outer surface of the first impeller housing 112 from a circumferential center of the first volute 1124. Therefore, while an entrance end of the first discharge port 1125 is connected to the first volute 1124, an exit end of the first discharge port 1125 may be connected to a second suction port 1131 of the second impeller housing 113 through a refrigerant connection pipe 116 to be described later.

Referring to FIGS. 3 and 4, the second impeller housing 113 may be formed almost symmetrically to the first impeller housing 112 with respect to the electric unit 120. For example, the second impeller housing 113 according to this embodiment may include the second suction port 1131, a second impeller accommodation portion 1132, a second diffuser 1133, a second volute 1134, and a second discharge port 1135. The second suction port 1131 may be formed substantially identically to the first suction port 1121, the second impeller accommodation portion (may be defined as a second fixed-side shroud) 1132 may be formed substantially identically to the first impeller accommodation portion 1122, the second diffuser 1133 may be formed substantially identically to the first diffuser 1123, the second volute 1134 may be formed substantially identically to the first volute 1124, and the second discharge port 1135 may be formed substantially identically to the first discharge port 1125. Description of the second impeller housing 113 is replaced with the description of the first impeller housing 112.

Referring to FIGS. 2 to 4, the electric unit 120 according to this embodiment may include the stator 121 and a rotor 122.

The stator 121 may include a stator core 1211 and stator coils 1212. The stator core 1211 may be press-fitted into the motor housing111 to be fixed to the motor housing 111, and the stator coils 1212 may be wound around the stator core 1211. Therefore, a circumferential gap is generated between both the stator coils 1212 and becomes a refrigerant flow path through which the first chamber 1114a and the second chamber 1114b communicate with each other.

The rotor 122 may be spaced apart from an inner circumferential surface of the stator 121 to be rotatable inside the stator 121. The rotor 122 includes a rotor core 1221 and permanent magnets 1222, and the rotor core 1221 may be coupled to the rotary shaft 130 or may be omitted. When the rotor core 1221 is omitted, the permanent magnets 1222 may be attached to an outer circumferential surface of the rotary shaft 130 or may be mounted inside the rotary shaft 130. In this embodiment, an example is illustrated in which the permanent magnets 1222 are inserted into the rotary shaft 130 such that a portion of the rotary shaft 130 forms the rotor core 1221.

Referring to FIGS. 3 and 4, the rotary shaft 130 according to this embodiment may include a driving shaft portion 131, a first impeller shaft portion 132, and a second impeller shaft portion 133.

The driving shaft portion 131 may be formed in a cylindrical shape to be rotatably inserted into the stator 121. For example, a length of the driving shaft portion 131 may be formed longer than or equal to an axial length of the stator 121, and an axial center of the driving shaft portion 131 may be coupled to an axial center of the stator 121 to be located on the same line as the axial center of the stator 121 in the radial direction.

The first impeller shaft portion 132 may extend or be assembled as a single body from one end of the driving shaft portion 131, and the second impeller shaft portion 133 may extend or be assembled as a single body from one end of the driving shaft portion 131. In this embodiment, an example is illustrated in which the first impeller shaft portion 132 and the second impeller shaft portion 133 are assembled from both ends of the driving shaft portion 131, respectively.

The thrust runner 1324 supported in the axial direction by a first axial bearing and a second axial bearing, which will be described later, may be formed on the first impeller shaft portion 132. For example, the thrust runner 1324 may extend in the radial direction from an outer circumferential surface of a first bearing surface portion 1322 to be formed in a disk shape.

Referring to FIGS. 3 and 4, the thrust runner 1324 may be located between the first bearing shell 143 and the bearing support portion 1115 to be supported in the axial direction. In other words, the thrust rummer 1324 may form a movable-side support portion, and each of the first bearing shell 143 and the bearing support portion 1115 may form a fixed-side support portion. Therefore, the rotary shaft 130 may be supported in both axial directions together with the first impeller 151 and a second impeller 161, which are coupled to both ends of the rotary shaft 130.

The thrust runner 1324 may be formed such that an outer circumferential surface thereof is spaced apart from an inner circumferential surface of the first chamber 1114a. An outer diameter of the thrust runner 1324 may be formed smaller than an inner diameter of the first chamber 1114a. Therefore, the refrigerant supplied to a first axial bearing 141b and a second axial bearing 141c through the refrigerant supply unit 170 to be described later flows toward the driving motor 120.

Although not shown in the drawings, the first axial bearing 141b may be arranged on the first side surface 1324a of the thrust runner 1324, and the second axial bearing 141c may be arranged on a second side surface 1324b of the thrust runner 1324. In this case, as both the first axial bearing 141b and the second axial bearing 141c are installed on the rotary shaft 130, the installation and assembly of the first axial bearing 141b and the second axial bearing 141c can be easily accomplished. The first axial bearing 141b and the second axial bearing 141c will be again described later.

Referring to FIGS. 3 and 4, the second impeller shaft portion 133 may be inserted into a second compression unit-side end portion (hereinafter, referred to as a second end portion) of the driving shaft portion 131 to be fixed to the driving shaft portion 131. For example, like the first impeller shaft portion 132, the second impeller shaft portion 133 may be welded and coupled to the driving shaft portion 131 in a state in which the second impeller shaft portion 133 is press-fitted into the second end portion of the driving shaft portion 131.

The second impeller shaft portion 133 may be formed symmetrically to the first impeller shaft portion 132 with respect to the driving shaft portion 131, and a thrust runner (not shown) may be excluded as an axial bearing is not arranged in a second bearing portion 142. In other words, the second impeller shaft portion 133 may include a second bearing surface portion 1332, and the axial bearing may be arranged even in the second bearing portion 142 such that the thrust runner (not shown) is arranged on the second impeller shaft portion 133 in some cases.

The bearing unit 140 according to this embodiment may include the first bearing portion 141 and the second bearing portion 142. The bearing portion 141 may be located between the electric unit (or driving motor) 120 and the first compression unit 150, and the second bearing portion 142 may be located between the electric unit (or driving motor) 120 and the second compression unit 160. Accordingly, the bearing unit 140 can stably support the first compression unit 150 and the second compression unit 160, which are respectively arranged on both the ends of the rotary shaft 130.

Referring to FIGS. 3 to 5, the first bearing portion 141 may include a first radial bearing 141a, the first axial bearing 141b, and the second axial bearing 141c. The first radial bearing 141a may be arranged in a first shaft hole 143a forming an inner circumferential surface of the first bearing shell 143, the first axial bearing 141b may be arranged on one side surface of the first bearing shell 143, and the second axial bearing 141c may be arranged to face both axial side surfaces of the thrust runner 1324.

The first radial bearing 141a may be configured as a gas foil bearing. For example, the first radial bearing 141a may include an uneven-shaped bump foil (no reference numeral) and an arc-shaped top foil (no reference numeral).

The first radial bearing 141a may be arranged on the inner circumferential surface of the first bearing shell 143 and/or an inner circumferential surface of a first bearing plate 1451 to be described later to face the outer circumferential surface of the rotary shaft 130, accurately the first bearing surface portion 1322 in the radial direction. Therefore, during rotation of the rotary shaft 130, the liquid refrigerant which is the working fluid is introduced into the first radial bearing 141a to support the rotary shaft 130 in the radial direction while forming a kind of oil film by means of a dynamic pressure. The gas foil bearing is generally known in the art, and therefore, its detailed description will be omitted.

However, in the first radial bearing 141a according to this embodiment, the bump foil may convexly protrude in the radial direction to be unevenly formed along a circumferential direction, and the top foil may be spaced apart from the outer circumferential surface of the rotary shaft 130 by a predetermined interval. Therefore, an axial refrigerant flow path having both open axial ends may be formed in the first radial bearing 141a.

The first axial bearing 141b according to this embodiment may include a first static pressure bearing portion 145 and a first dynamic pressure bearing portion 146.

The first static pressure bearing portion 145 supports a first axial direction of the rotary shaft 130, using a pressure (static pressure) of the refrigerant supplied from the outside of the housing 110, and the first dynamic pressure bearing portion 146 supports the first axial direction of the rotary shaft 130, using a pressure (dynamic pressure) generated during rotation of the rotary shaft 130. Accordingly, the first axial bearing 141b supports the first axial direction of the rotary shaft 130 by means of the static pressure and/or the dynamic pressure, to be stably supported with the axial direction during start and/or an operation of the compressor 10. The first axial bearing 141b along with the second axial bearing 141c will be again described later.

The second axial bearing 141c according to this embodiment may include a second static pressure bearing portion 147 and a second dynamic pressure bearing portion 148.

The second static pressure bearing portion 147 supports a second axial direction of the rotary shaft 130, using the pressure (static pressure) of the refrigerant supplied from the outside of the housing 110, and the second dynamic pressure bearing portion 148 supports the second axial direction of the rotary shaft 130, using the pressure (dynamic pressure) generated during the rotation of the rotary shaft 130. Accordingly, the second axial bearing 141c supports the second axial direction of the rotary shaft 130 by means of the static pressure and/or the dynamic pressure, to be stably supported with respect to the axial direction during start and/or an operation of the compressor 10. The second axial bearing 141c along with the first axial bearing 141b will be again described later.

Referring to FIGS. 3 and 4, the second bearing portion 142 according to this embodiment may include the second radial bearing 142a arranged in a second bearing shell 144. In other words, the second radial bearing 142a may be arranged in a second shaft hole 144a forming an inner circumferential surface of the second bearing shell 144.

The second bearing shell 144 may be formed in an annular shape having the inner circumferential surface and an outer circumferential surface, which are closed. For example, the second bearing shell 144 may be formed in an annular shape which has a predetermined axial length and has the second shaft hole 144a passing through the center thereof in the axial direction.

An inner diameter of the second shaft hole 144a may be formed larger than an outer diameter of the second bearing surface portion 1332 arranged in the second impeller shaft portion 133. Therefore, a front end of the second impeller shaft portion 133 constituting the rotary shaft 130 may be coupled to the second impeller 161 by passing through the second shaft hole 144a of the second bearing shell 144.

The second radial bearing 142a may be arranged on an inner circumferential surface of the second shaft hole 144a. Like the first radial bearing 141a, the second radial bearing 142a may be configured as a gas foil bearing. Description of the second radial bearing 142a is replaced with the description of the first radial bearing 141a.

However, as the second radial bearing 142a is arranged to communicate with the motor chamber (accurately the second chamber) 1114 at a side facing the motor chamber 1114 as described above, the liquid refrigerant injected into the motor chamber 114 may be supplied directly to the second radial bearing 142a.

Referring to FIGS. 3 and 4, the first compression unit 150 according to this embodiment may include the first impeller 151, the first diffuser 1123, and the first volute 1124. However, among the components constituting the first compression unit 150, the first diffuser 1123 and the first volute 1124 are the same as described above in the first impeller housing 112. That is, the first diffuser 1123 may be formed between the first impeller housing 112 and the first bearing shell 143, and the first volute 1124 may be formed in the first impeller housing 112.

The first impeller 151 may include a first hub 1511, a first blade 1512, and a first shroud 1513. The first impeller 151 along with the first diffuser 1123 and the first volute 1124 functionally forms the first compression unit 150 which is the 1-stage compression unit as described above. Therefore, a suction side of the first impeller 151 may be connected to the refrigerant suction pipe 115, and a discharge side of the first impeller 151 may be connected to a suction side of the second impeller 161 forming a portion of the 2-stage compression unit (second compression unit) by the refrigerant connection pipe 116.

Referring to FIGS. 3 and 4, the second compression unit 160 according to this embodiment may include the second impeller 161, the second diffuser 1133, and the second volute 1134. However, among the components constituting the second compression unit 160, the second diffuser 1133 and the second volute 1134 are the same as described above in the second impeller housing 113. That is, the second diffuser 1133 may be formed between the second impeller housing 113 and the second bearing shell 144, and the second volute 1134 may be formed in the second impeller housing 113.

The second impeller 161 may include a first hub 1611, a second blade 1612, and a second shroud 1613. The second impeller 161 along with the second diffuser 1133 and the second volute 1134 functionally forms the 2-stage compression unit. Therefore, the suction side of the second impeller 161 may be connected to the discharge side of the first impeller 151 by the refrigerant connection pipe 116, and a discharge side of the second impeller 161 may be connected to an entrance side of the condenser 20 by a refrigerant discharge pipe 117.

A diameter of the second impeller 161 may be formed smaller than that of the first impeller 151, and a whole shape of the second impeller 161 may be formed almost identically to that of the first impeller 151. Therefore, description of the shape of the second impeller 161 is replaced with the description of the first impeller 151.

The turbo compressor according to this embodiment described above is operated as follows.

That is, when power is applied to the electric unit 120, a rotational force is generated by an induced current between the stator 121 and the rotor 122, and the rotary shaft 130 rotates together with the rotor 122 by means of the rotational force.

Then, the rotational force of the electric unit 120 is transferred to the first impeller 151 and the second impeller 161 by the rotary shaft 130, and the first impeller 151 and the second impeller 161 simultaneously rotate in the respective impeller accommodation portion 1122 and 1132.

Then, the refrigerant passing through the evaporator 40 of the refrigeration cycle apparatus 1 is introduced into the first impeller accommodation portion 1122 through the refrigerant suction pipe 115 and the first suction port 1121. The static pressure of the refrigerant increases as the refrigerant flows while whirling along the first blade 1512 of the first impeller 151, and at the same time, the refrigerant passes through the first diffuser 1123 with a centrifugal force.

Then, kinetic energy of the refrigerant passing through the first diffuser 1123 leads to an increase in pressure head in the first diffuser 1123 by means of the centrifugal force, and the centrifugally compressed high-temperature and high-pressure refrigerant is gathered in the first volute 1124 to be discharged from the first compression unit 150 through the first discharge port 1125.

Then, the refrigerant discharged from the first compression unit 150 is guided to the second suction port 1131 of the second impeller housing 113 constituting the second compression unit 160 through the refrigerant connection pipe 116. The static pressure of the refrigerant increases as the refrigerant flows while whirling along the second blade 1612 of the second impeller 161, and at the same time, the refrigerant passes through the second diffuser 1133 with the centrifugal force.

Then, the refrigerant passing through the second diffuser 1133 is compressed up to a desired pressure by means of the centrifugal force, and the 2-stage compressed high-temperature and high-pressure refrigerant is gathered in the second volute 1134 to be discharged to the condenser 20 through the second discharge port 1135 and the refrigerant discharge pipe 117. Therefore, the above-described series of processes is repeated.

The first impeller 151 and the second impeller 161 receive thrust forces thrust to rear sides of the respective impellers 151 and 161 by the refrigerant sucked through the first and second suction ports 1121 and 1131 of the impeller housings 112 and 113. However, in this embodiment, in the case of a so-called both-end type turbo compressor in which the first impeller 151 and the second impeller 161 are arranged to turn their backs on each other, a thrust force generated in the first impeller 151 and a thrust force generated in the second impeller 161 may be cancelled while having directions opposite to each other.

However, even in the both-end type turbo compressor, a thrust force generated in the first compression unit 150 and a thrust force generated in the second compression unit 160 may not be the same or constant during an actual operation. Therefore, the rotary shaft 130 may be thrust in the axial direction toward the first compression unit 150 or the second compression unit 160, and hence the axial bearings 141b and 141c may be separately arranged at a side of the first compression unit 150 and/or a side of the second compression unit 160.

A static pressure bearing that supports the rotary shaft 130 by supply a constant pressure from the outside and a dynamic pressure bearing that supports the rotary shaft 130, using a pressure generated during rotation of the rotary shaft 130, may be applied together to each of the axial bearings 141b and 141c.

The static pressure bearing provides a fluid with a constant pressure to an axial bearing surface BS, thereby suppressing friction loss on the axial bearing surface BS at an early stage of an operation of the compressor 10, but a separate fluid supply apparatus for providing the fluid with the constant pressure to the axial bearing surface BS is required.

On the other hand, the dynamic pressure bearing does not require the separate fluid supply apparatus, but the friction loss on the axial bearing surface BS may occur in a state in which a dynamic pressure is not yet formed at an early stage of an operation of the compressor 10 or in an overload condition.

Accordingly, each of the axial bearings according to this embodiment includes a static pressure bearing portion and a dynamic pressure bearing portion, to suppress friction loss at an early stage of an operation and/or in an overload condition. At the same time, the axial bearing according to this embodiment suppresses the refrigerant from being bypassed toward the axial bearing surface during a normal operation and/or in a low load condition, thereby increasing performance of the compressor and/or cooling power of the refrigeration cycle apparatus including the compressor. In this embodiment, the axial bearings are arranged on both sides of the thrust runner, respectively. Hereinafter, the first axial bearing arranged to face the first side surface of the thrust runner is mainly described, and description of the second axial bearing arranged to face the second side surface of the thrust runner is replaced with the description of the first axial bearing.

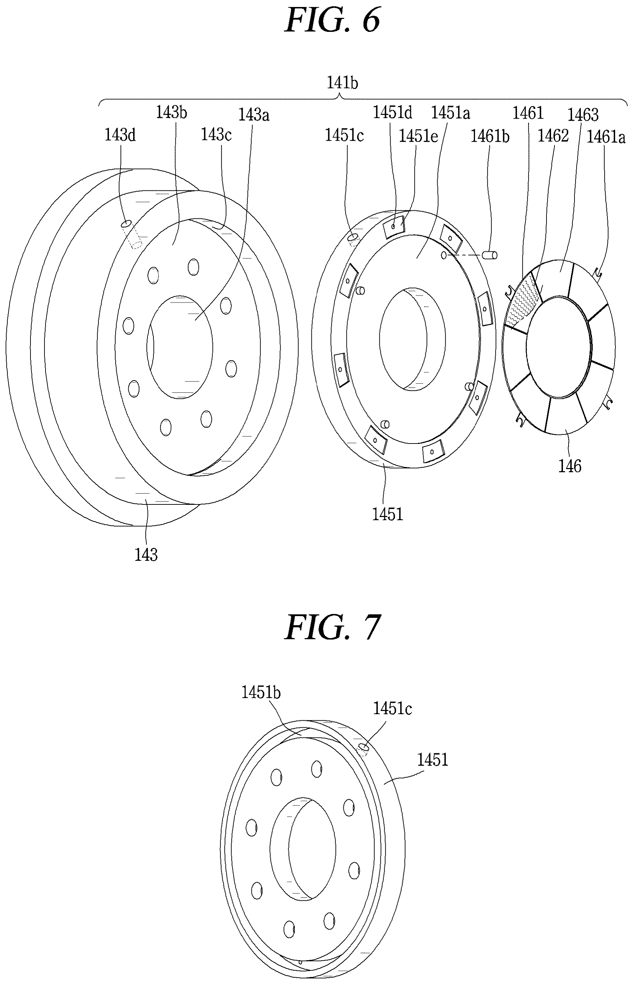

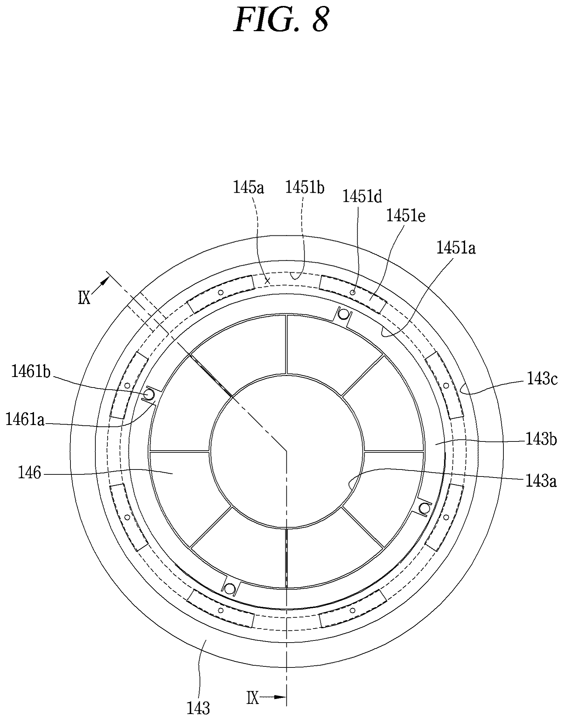

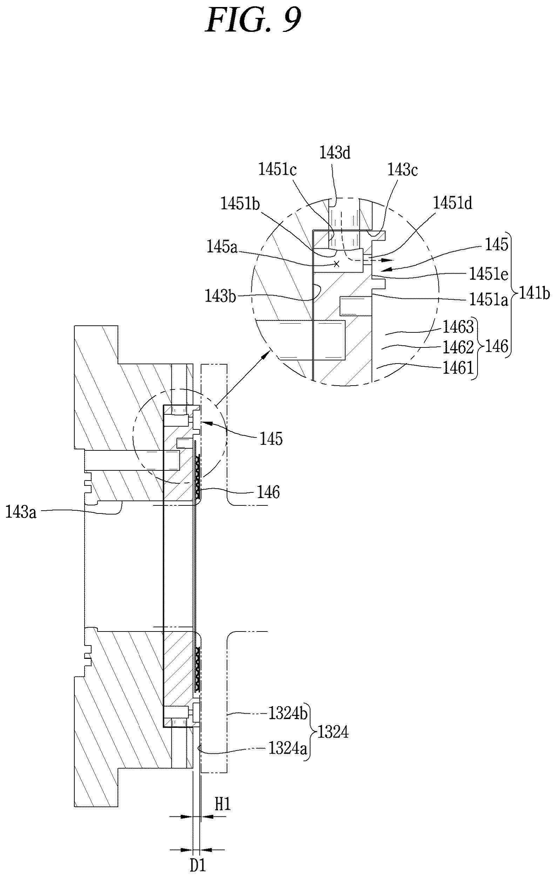

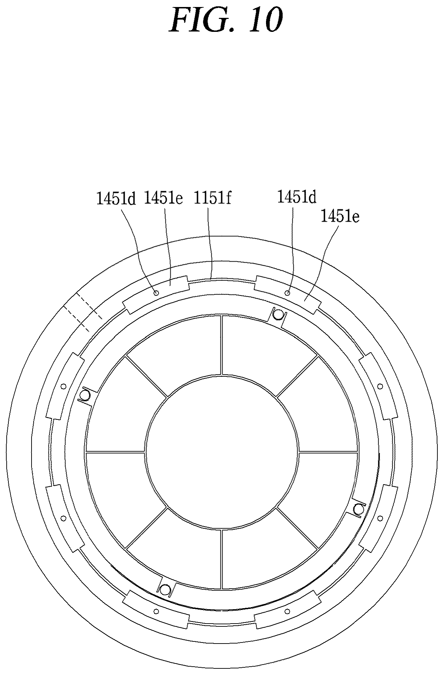

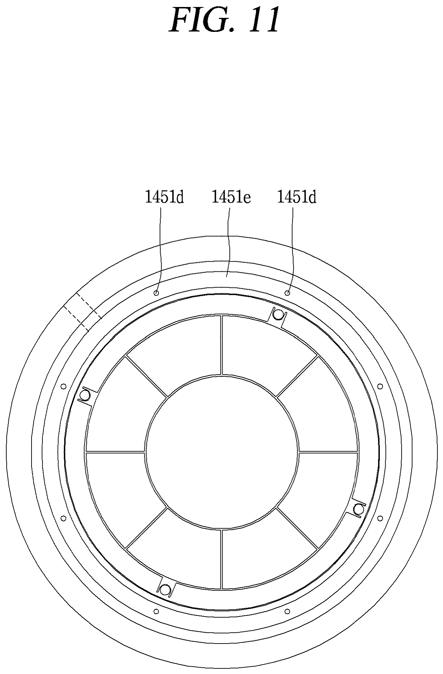

FIG. 6 is an exploded perspective view showing an axial bearing according to this embodiment. FIG. 7 is a perspective view showing a portion of the axial bearing in FIG. 6, which is viewed from an opposite side. FIG. 8 is an assembled plan view showing the axial bearing according to FIG. 6. FIG. 9 is a cross-sectional view taken along line "IX-IX" of FIG. 8. FIGS. 10 and 11 are plan views showing other embodiments of an orifice accommodation groove in FIG. 6.

Referring to FIGS. 6 to 9, the first axial bearing 141b according to this embodiment may include the first static pressure bearing portion 145 and the first dynamic pressure bearing portion 146, which are arranged on the first bearing shell 143. For example, the first static pressure bearing portion 145 may be supported by the first bearing shell 143, and the first dynamic pressure bearing portion 145 may be supported by the first static pressure bearing portion 145. Therefore, it may be understood that the first static pressure bearing portion 145 and the first dynamic pressure bearing portion 146 are supported by the first bearing shell 143. However, in some cases, each of the first static pressure bearing portion 145 and the first dynamic pressure bearing portion 146 may be supported by the first bearing shell 143.

The first static pressure bearing portion 145 according to this embodiment may be formed by the first bearing shell 143 and the first bearing plate 1451. In other words, the first static pressure bearing portion 145 may be formed between the first side surface of the first bearing shell 143, which faces the first side surface 1324a of the thrust runner 1324, and the first bearing plate 1451 arranged on the first side surface of the first bearing shell 143.

The first bearing shell 143 may be formed in an annular shape, and a first bearing accommodation groove 143b may be formed in the first side surface of the first bearing shell 143 facing the thrust runner 1324 such that the first bearing plate 1451 forming a portion of the first axial bearing 141b is accommodated therein.

The first bearing accommodation groove 143b may be formed in an annular shape, and a plate support surface 143 may be formed on an outer circumferential surface of the first bearing accommodation groove 143b to be stepped. Therefore, the first bearing plate 1451 may be inserted into the first bearing accommodation groove 143b to be supported in the radial direction by the plate support surface 143c.

In addition, the first bearing accommodation groove 143b may be formed at the same height as a first side surface of the first bearing plate 1451, which faces the first side surface 1324a of the thrust runner 1324. Therefore, the first bearing accommodation groove 143b along with a first refrigerant flow path groove (or first fluid flow path groove) 1451b of the first bearing plate 1451 forms a first internal path 145a through which the liquid refrigerant supplied from the condenser 20 flows.

A first refrigerant connection hole 143d forming a portion of the refrigerant supply unit 170 may be formed in one side of an outer circumferential surface of the first bearing shell 143. One end of the first refrigerant connection hole 143d may be connected to the refrigerant supply pipe 171 to be described later through a first supply path 1721 provided in the motor housing 111, and the other end of the first refrigerant connection hole 143d may be connected to a first refrigerant injection hole (or first fluid injection hole) 1451c arranged in the first bearing plate 1451 to be described later. Therefore, the first refrigerant connection hole (or first fluid connection hole) 143d may communicate with the first internal path 145a through the first refrigerant injection hole 1451c such that the liquid refrigerant passing through the condenser 20 is supplied to the first internal path 145a.

A refrigerant control valve 173 connected to a valve control unit 174 to be described later may be located in the middle of the refrigerant supply pipe 171. In other words, one end of the refrigerant supply pipe 171 may be connected to the exit of the condenser 20, and the other end of the refrigerant supply pipe 171 may be connected to the first refrigerant connection hole 143d through the refrigerant control valve 173. Therefore, the high-temperature and high-pressure refrigerant passing through the condenser 20 may be supplied to the first internal path 145 through the first refrigerant connection hole 143d or be blocked according to opening/closing of the refrigerant control valve 173.

Referring to FIGS. 6 and 7, the first bearing plate 1451 may be formed in an annular disk shape, an inner diameter of the first bearing plate 1451 may be formed almost equal to an inner diameter of the first bearing shell 143, and an outer diameter of the first bearing plate 1451 may be formed almost equal to an outer diameter of the first bearing accommodation groove 143b. Therefore, the first bearing plate 1451 may be inserted into the first bearing accommodation groove 143b to be press-fitted or bolt-fastened to the first bearing shell 143. In this embodiment, an example is illustrated in which the first bearing plate 1451 is bolt-fastened to the first bearing shell 143.

A first foil accommodation groove 1451a may be formed in the first side surface of the first bearing plate 1451, i.e., the first side surface of the first bearing plate 1451, which faces the first side surface 1324a of the thrust runner 1324. For example, the first foil accommodation groove 1451a may be formed in an inner circumferential side in the first side surface of the first bearing plate 1451. Accordingly, a first foil plate1461 constituting the first dynamic pressure bearing portion 146 to be described later is formed inwardly of a first orifice 1451d to be described later, to suppress an increase in manufacturing cost due to the first foil plate 1461 and reduce friction loss caused by the first foil plate 1461.

The first foil accommodation groove 1451a may be formed in an annular shape, a depth D1 of the first foil accommodation groove 1451a may be formed smaller than or equal to an initial height H1 of the first dynamic pressure bearing portion 146 to be described later as shown in FIG. 9. In other words, the depth D1 of the first foil accommodation groove 1451a may be formed as a depth in which a first side surface of the first foil plate 1461, which faces the first side surface 1324a of the thrust runner 1324, can be in sliding contact with the first side surface 1324a of the thrust runner 1324 during stop of the compressor 10 and/or at an early stage of an operation of the compressor 10. Accordingly, the first side surface of the first foil plate 1461 constituting the first dynamic pressure bearing portion 146 to be described later is in sliding contact with the first side surface 1324a of the thrust runner 1324 at an early stage of an operation of the compressor 10, but friction loss in the first dynamic pressure bearing portion 146 can be suppressed by the first static pressure bearing portion 145.

The first refrigerant flow path groove 1451b may be formed in a second side surface of the first bearing plate 1451, which faces back toward the first side surface 1324a of the thrust runner 1324. For example, the first refrigerant flow path groove 1451b may be formed to be recessed by a predetermined depth toward the thrust runner 1324 from the second side surface of the first bearing plate 1451. Therefore, the first refrigerant flow path groove 1451b along with the first bearing accommodation groove 143b of the first bearing shell 143 constituting a first bearing support member forms the first internal path 145a.

Although not shown in the drawings, the first refrigerant flow path groove may be formed in the first bearing accommodation groove 143b of the first bearing shell 143 or may be formed in each of the first bearing accommodation groove 143b of the first bearing shell 143 and the second side surface of the first bearing plate 1451 facing the same.

The first refrigerant injection hole 1451c communicating with the above-described first refrigerant connection hole 143d of the first bearing shell 143 may be formed in an outer circumferential surface of the first bearing plate 1451 to path through the first bearing plate 1451 in the radial direction. For example, one end of the first refrigerant injection hole 1451c may communicate with the first refrigerant connection hole 143d, and the other end of the first refrigerant injection hole 1451c may be formed while passing through an outer circumferential surface of the first refrigerant flow path groove 1451b. Therefore, the first internal path 145a may communicate with the refrigerant supply pipe 171 to be described later through the first refrigerant injection hole 1451c and the first refrigerant connection hole 143d.

At least one first orifice 1451d may be formed in the first side surface of the first bearing plate 1451 facing the thrust runner 1324 such that the refrigerant flowing through the first internal path 145a can be sprayed toward the first side surface 1324a of the thrust runner 1324. Therefore, the refrigerant flowing through the first internal path 145a forms an annular static pressure while being sprayed toward the first side surface 1324a of the thrust runner 1324 through each first orifice 1451d.

In this case, a plurality of first orifices 1451d may be formed smaller than the first refrigerant injection hole (or first refrigerant connection hole) 1451c. For example, a total cross-sectional area of the plurality of first orifices 1451d may be formed smaller than or equal to a total cross-sectional area of the first refrigerant injection hole (or first refrigerant connection hole) 1451c. Accordingly, the refrigerant to be sprayed through the plurality of first orifices 1451d can be sufficiently supplied to the first internal path 145a through the first refrigerant connection hole 143d and the first refrigerant injection hole 1451c.

In addition, the first orifice 1451d may path through the first side surface of the first bearing plate 1451 from one side surface of the first refrigerant flow path groove 1451b, and the plurality of first orifices 1451d may be formed at equidistant intervals on a same circumferential line. Accordingly, the pressure of the refrigerant sprayed toward the first side surface 1324a of the thrust runner 1324 can be equally distributed along the circumferential direction, so that the axial direction of the rotary shaft 130 can be more stably supported to that extent. However, in some cases, the plurality of first orifices 1451d may be formed at different intervals on different circumferential lines.

In addition, the plurality of first orifices 1451d may be formed as fine through-holes passing through the first bearing plate 1451 in the axial direction. The plurality of first orifices 1451d may be formed to have a same shape and/or a same size. Accordingly, the pressure of the refrigerant sprayed toward the first side surface 1324a of the thrust runner 1324 can be equally distributed along the circumferential direction, and the plurality of first orifices 1451d can be easily formed. However, in some cases, the plurality of first orifices 1451d may be formed to have different shapes and/or different sizes along the circumferential direction.

A first orifice accommodation groove 1451e may be formed in the first side surface of the first bearing plate 1451 such that the first orifice 1451d is accommodated therein. In other words, the plurality of first orifices 1451d may be accommodated in a plurality of first orifice accommodation grooves 1451e having a predetermined depth, respectively. Accordingly, as the refrigerant sprayed through the first orifice 1451d is widely diffused in the first orifice accommodation groove 1451e, the bearing area in the first orifice accommodation groove 1451e can be enlarged.

For example, the first orifice accommodation groove 1451e may be formed to be recessed by the predetermined depth in the axial direction from the first side surface of the first bearing plate 145, which faces the first side surface 1324a of the thrust runner 1324. In other words, the first orifice accommodation groove 1451e may be formed such that each first orifice 1451d is individually accommodated therein, and the first orifice 1451d may be formed to be located in a geometric center of the first orifice accommodation groove 1451e. Accordingly, as a distance from the first orifice 1451d to an inner circumferential surface of the first orifice accommodation groove 1451e is formed symmetrically with respect to the first orifice 1451d, the bearing force in the first orifice accommodation groove 1451e can be uniformly formed.

In addition, the plurality of first orifice accommodation grooves 1451e may be formed at a predetermined interval along the circumferential direction. As shown in FIG. 7, the plurality of first orifice accommodation grooves 1451e may be independently formed such that the first orifice accommodation grooves 1451e adjacent to each other in the circumferential direction are separated from each other. Accordingly, the area of the first orifice accommodation groove 1451e is optimized, thereby enlarging the bearing area in each first orifice accommodation groove 1451e and securing an appropriate bearing force in the first orifice accommodation groove 1451e.

However, in some cases, the plurality of first orifice accommodation grooves 1451e may be connected to each other. For example, as shown in FIG. 10, first communication grooves 1451f may be respectively formed between the plurality of first orifice accommodation grooves 1451e such that the first orifice accommodation grooves 1451d adjacent to each other in the circumferential direction communicate with each other. Accordingly, although some first orifices 1451d are blocked, the refrigerant sprayed through other first orifices 1451d adjacent to the blocked first orifices 1451d is introduced into the first orifice accommodation grooves 1451e accommodating the blocked first orifices 1451d through first communication grooves 1451f, so that the bearing force can be entirely equally formed.

In this case, a depth of the first communication groove 1451f may be formed equal to the depth of the first orifice accommodation groove 1451e, and a width of the first communication groove 1451f may be formed smaller than a width of the first orifice accommodation groove 1451e. Accordingly, the bearing force in each first orifice accommodation groove 1451e can be formed as high as possible.

Only one first orifice accommodation groove 1451e may be formed. For example, as shown in FIG. 11, the first orifice accommodation groove 1451e may extend along the circumferential direction to be formed in an annular shape. In this case, the plurality of first orifices 1451d may be formed at the predetermined interval along the circumferential direction in the annular first orifice accommodation groove 1451e. Accordingly, as the first orifice accommodation groove 1451e is formed through single processing, the first orifice accommodation groove 1451e can be easily processed.

Referring back to FIGS. 8 and 9, the first dynamic pressure bearing portion 146 according to this embodiment may be arranged inside the first static pressure bearing portion 145. In other words, the first dynamic pressure bearing portion 146 may be inserted into the first bearing accommodation groove 143b arranged in the inner circumferential side in the first side surface of the first bearing plate 1451 to be fixed to the first bearing plate 1451. Thus, the contact area of the first dynamic pressure bearing portion 146 in contact with the first side surface 1324a of the thrust runner 1324 can be minimized. Accordingly, friction loss between the first dynamic pressure bearing portion 146 and the rotary shaft 130 can be reduced according to an operation condition in which the rotary shaft 130 is supported in the axial direction by the first dynamic pressure bearing portion 146.

Specifically, the first dynamic pressure bearing portion 146 may be configured as a gas foil bearing. In other words, the first dynamic pressure bearing portion 146 forming a first foil may be understood as an ordinary gas foil thrust bearing including the first foil plate 1461, a first bump foil 1462, and a first top foil 1463.

For example, in the first dynamic pressure bearing portion 146 forming the first foil, the first bump foil 1462 formed in an uneven shape may be stacked on the first side surface of the first foil plate 1461 formed in an annular shape, and the first top foil 1463 formed in an arc plate shape may be stacked on one axial side of the first bump foil 1462. Therefore, the first top foil 1463 may be arranged to face the first side surface 1324a of the thrust runner 1324. In this case, a gas foil bearing generally known in the art may be applied to the first dynamic pressure bearing portion 146 defined as the first foil, and therefore, detailed description of the first dynamic pressure bearing portion is omitted.

However, in the first dynamic pressure bearing portion 146 according to this embodiment, the first bump foil 1462 may convexly protrude in the axial direction to be unevenly formed along the circumferential direction, and the first top foil 1463 may be spaced apart from the thrust runner 1324 by a predetermined interval during stop of the compressor 10. Therefore, both ends of the first axial bearing 141b in the radial direction may be open such that a radial refrigerant flow path is formed. Accordingly, the refrigerant sprayed onto a first axial bearing surface BS1 through the above-described first orifice 1451d can be smoothly supplied not only to the first axial bearing 141b but also to the first radial bearing 141a through a radial refrigerant flow path (no reference numeral) located in the inner circumferential surface of the first bearing shell 143.

The first foil plate 1461 according to this embodiment may be inserted into the first foil accommodation groove 1451a located in the first side surface of the first bearing plate 1451 to be fixed to the first bearing plate 1451. For example, a plurality of first fixing protrusion portions 1461a may be formed at equidistant intervals along the circumferential direction on the outer circumferential surface of the first foil plate 1461, and a first fixing pin 1461b press-fitted or fastened to the first bearing plate 1451 may be inserted into the first fixing protrusion portion 1461a. Accordingly, the first foil plate 1461 can be firmly fixed to the first bearing plate 1451.

The first dynamic pressure bearing portion 146 including the first foil plate 1461, the first bump foil 1462, and the first top foil 1463 may be formed in an annular shape, and the initial height H1 of the first dynamic pressure bearing portion 146 may be formed larger than or equal to the depth D1 of the first foil accommodation groove 1451a. In other words, the initial height H1 of the first dynamic pressure bearing portion 146 defined as the first foil may be formed as a thickness with which a first side surface of the first top foil 1463, which faces the first side surface 1324a of the thrust runner 1324 can be in sliding contact with the first side surface 1324a of the thrust runner 1324 during stop of the compressor 10 and/or at an early stage of an operation of the compressor 10. Accordingly, a first side surface of the first foil plate 1461 constituting the first dynamic pressure bearing portion 146 is in sliding contact with the first side surface 1324a of the thrust runner 1324 at an early stage of an operation of the compressor 10, but the friction loss in the first dynamic pressure bearing portion 146 can be suppressed by the first static pressure bearing portion 146.

Meanwhile, a basic configuration and an operation effect according thereto in the second axial bearing 141c are identical to those in the first axial bearing 141b except only different installation positions of the first axial bearing 141b and the second axial bearing 141c. For example, as shown in FIGS. 3 to 5, the second axial bearing 141c may include the second static pressure bearing portion 147 and the second dynamic pressure bearing portion 148, which are arranged on the bearing support portion 1115. In other words, a second bearing accommodation groove 1115a may be formed in a first side surface of the bearing support portion 1115, which faces the second side surface 1324b of the thrust runner 1324, such that a second bearing plate 1471 constituting the second static pressure bearing portion 147 is inserted thereinto, and a second foil accommodation groove 1471a may be formed in an inner circumferential side of the second bearing plate 1471 such that a second foil constituting the second dynamic pressure bearing portion 148 is inserted thereinto.

The second bearing plate 1471 may correspond to the first bearing plate 1451, and the second bearing accommodation groove 1115a may correspond to the first bearing accommodation groove 143b. The second foil accommodation groove 1471a may correspond to the first foil accommodation groove 1451a, and the second dynamic pressure bearing portion 148 may correspond to the first dynamic pressure bearing portion 146. Therefore, descriptions of the second bearing plate 1471, the second bearing accommodation groove 1115a, the second foil accommodation groove 1471a, and the second dynamic pressure bearing portion 148 are replaced with the descriptions of the first bearing plate 1451, the first bearing accommodation groove 143b, the first foil accommodation groove 1451a, and the first dynamic pressure bearing portion 146.

In addition to the second foil accommodation groove 1471a, a second refrigerant flow path groove (or second fluid flow path groove) 1471b, a second refrigerant injection hole (or second fluid injection hole) 1471c, a second orifice 1471d, a second orifice accommodation groove 1471e, and a second communication groove (not shown) may be further formed in the second bearing plate 1471. The second refrigerant flow path groove 1471b, the second refrigerant injection hole 1471c, the second orifice 1471d, the second orifice accommodation groove 1471e, and the second communication groove (not shown) may be formed to respectively correspond to the first refrigerant flow path groove 1451b, the first refrigerant injection hole 1451c, the first orifice 1451d, the first orifice accommodation groove 1451e, and the first communication groove 1451f, which are described above. Therefore, descriptions of the second refrigerant flow path groove 1471b, the second refrigerant injection hole 1471c, the second orifice 1471d, the second orifice accommodation groove 1471e, and the second communication groove (not shown) are replaced with the descriptions of the first refrigerant flow path groove 1451b, the first refrigerant injection hole 1451c, the first orifice 1451d, the first orifice accommodation groove 1451e, and the first communication groove 1451f.

Meanwhile, the basic configuration and the operation effect according thereto in the second axial bearing 141c are identical to those in the first axial bearing 141b except only different installation positions of the first axial bearing 141b and the second axial bearing 141c. In other words, the second axial bearing 141c may include the second static pressure bearing portion 147 and the second dynamic pressure bearing portion 148, which are arranged on the bearing support portion 1115.

For example, the second bearing accommodation groove 1115a may be formed in the first side surface of the bearing support portion 1115, which faces the second side surface 1324b of the thrust runner 1324, such that the second bearing plate 1471 constituting the second static pressure bearing portion 147 is inserted thereinto.

The second bearing plate 1471 may correspond to the first bearing plate 1451. For example, the second foil accommodation groove 1471a, the second refrigerant flow path groove 1471b, the second refrigerant injection hole 1471c, the second orifice 1471d, the second orifice accommodation groove 1471e, and the second communication groove (not shown) may be formed in the second bearing plate 1471. Descriptions of the second refrigerant flow path groove 1471b, the second refrigerant injection hole 1471c, the second orifice 1471d, the second orifice accommodation groove 1471e, and the second communication groove (not shown) are replaced with the descriptions of the first refrigerant flow path groove 1451b, the first refrigerant injection hole 1451c, the first orifice 1451d, the first orifice accommodation groove 1451e, and the first communication groove 1451f, which are described above.

In addition, the second foil constituting the second dynamic pressure bearing portion 148 may be inserted into the second foil accommodation groove 1471a located in the inner circumferential side of the second bearing plate 1471.

The second dynamic pressure bearing portion 148 may correspond to the first dynamic pressure bearing portion 146. For example, the second dynamic pressure bearing portion 148 may be configured as a gas foil bearing including a second foil plate 1481, a second bump foil 1482, and a second top foil 1483. Descriptions of the second foil plate 1481, the second bump foil 1482, and the second top foil 1483 are replaced with the descriptions of the first foil plate 1461, the first bump foil 1462, and the first top foil 1463, which are described above.

Meanwhile, the first static pressure bearing portion 145, the first dynamic pressure bearing portion 146, the second static pressure bearing portion 147, and the second dynamic pressure bearing portion 148, which are described above, may be operated by the refrigerant supplied from the outside. In other words, in this embodiment, the exit of the condenser 20, defined as the outside of the compressor 10, and the interior (e.g., the first internal path 145a and/or the second internal path 147a) of the compressor 10 may be connected to each other by the refrigerant supply unit 170. Therefore, a portion of the high-temperature and high-pressure refrigerant passing through the condenser 20 may be supplied to the first internal path 145a and/or the second internal path 147a through the refrigerant supply unit 170.

Referring back to FIGS. 4 and 5, the refrigerant supply unit 170 may include the refrigerant supply pipe 171, a refrigerant supply path 172, the refrigerant control valve 173, and the valve control unit 174.

The refrigerant supply pipe 171 may branch off in the middle of a refrigerant circulation pipe (no reference numeral) constituting the refrigeration cycle apparatus to be connected to the housing 110 of the compressor 10. In other words, one end of the refrigerant supply pipe 171 may branch off from a refrigerant circulation pipe 1a between the exit of the condenser 20 and an entrance of the expander 30, and the other end of the refrigerant supply pipe 171 may be connected to the refrigerant supply path 172 to be described later by passing through the motor housing 111. Therefore, the high-temperature and high-pressure liquid refrigerant passing through the condenser 20 flows toward the first internal path 145a and/or the second internal path 147a through the refrigerant supply pipe 171.

The refrigerant supply path 172 may be formed by passing through the motor housing 111. For example, the refrigerant supply path 172 may communicate with each of the first refrigerant connection hole 143d located in the first bearing shell 143 and/or a second refrigerant connection hole (or second fluid connection hole) 1115b located in the bearing support portion 1115 by passing through the first flange portion 1111 of the motor housing 111. Therefore, the high-temperature and the high-pressure refrigerant supplied through the refrigerant supply pipe 171 may be supplied to the first internal path 145a and/or the second internal path 147a through the refrigerant supply path 172.

The refrigerant supply path 172 may include a first supply path 1721 and a second supply path 1722. The first supply path 1721 is a path connected to the first internal path 145a through the first refrigerant connection hole 143d, and the second supply path 1722 is a path connected to the second internal path 147a through the second refrigerant connection hole 1115b. Therefore, the high-temperature and high-pressure refrigerant supplied through the refrigerant supply pipe 171 may be supplied to the first internal path 145a and/or the second internal path 147a through the refrigerant supply path 172.

The first supply path 1721 and the second supply path 1722 may connected in parallel to each other. For example, the second supply path 1722 may be formed to branch off in the middle of the first supply path 1721. Accordingly, each of the first axial bearing 141b and the second axial bearing 141c communicates with one refrigerant supply pipe 171, to simplify the refrigerant supply pipe 171.

Although not shown in the drawings, each of the first supply path 1721 and the second supply path 1722 may be independently formed to be connected to the refrigerant supply pipe 171. In this case, the first axial bearing 141b and the second axial bearing 141c may be controlled independently from each other.

The refrigerant control valve 173 may be arranged in the middle of the refrigerant supply pipe 171. For example, the refrigerant control valve 173 may be configured as a solenoid 2-way valve, a first opening of the refrigerant control valve 173 may be connected to the refrigerant circulation pipe 1a between the condenser 20 and the expander 30 through the refrigerant supply pipe 171, and a second opening of the refrigerant control valve 173 may be connected to the refrigerant supply path 172 through the refrigerant supply pipe 171.

Opening/closing of the refrigerant control valve 173 may be selectively controlled by the valve control unit 174 to be described later. For example, while the refrigerant supply pipe 171 is controlled to be open at an early stage of an operation and/or during an overload operation, the refrigerant supply pipe 171 may be controlled to be closed during a normal operation and/or a low load operation.

Referring to FIGS. 1 and 4, the valve control unit 174 selects whether or not to supply the refrigerant passing through the middle of the refrigeration cycle apparatus 1, i.e., the condenser 20 to the first internal path 145a and/or the second internal path 147a, and may include a measuring unit 1741 and a control unit 1742.

The measuring unit 1741 may be configured as a sensor capable of determining an operation of the compressor 10 and/or an overload operation of the compressor 10, e.g., a current sensor capable of measuring a current applied to the driving motor 120.

The control unit 1742 may detect a current amount applied to the driving motor 120, determine an operation state by comparing the applied current amount with a reference current amount, and control whether or not to open/close the refrigerant control valve 173, based on the determined operation state. For example, when the applied current amount is larger than the reference current amount, the control unit 1742 may determine that the operation state is an early stage of an operation and/or an overload operation and control the refrigerant control valve 173 to be open. On the other hand, when the applied current amount is smaller than the reference current amount, the control unit 1742 may determine that the operation state is a normal operation and/or a low load operation and control the refrigerant control valve 173 to be closed.

Meanwhile, in some cases, the valve control unit 174 may open/close the refrigerant control valve 173, based on a pressure applied to the first axial bearing 141b and/or the second axial bearing 141c.

When the first axial bearing 141b and the second axial bearing 141c are configured as a hybrid axial bearing including the static pressure bearing portions 145 and 147 and the dynamic pressure bearing portions 146 and 148, respectively, according to an operation state of the compressor 10 and/or the refrigeration cycle apparatus 1 having the same, the static pressure bearing portions 145 and 147 and the dynamic pressure bearing portions 146 and 148 may operate together as the axial bearing, or only the dynamic pressure bearing portions 146 and 148 except the static pressure bearing portions 145 and 147 may operate as the axial bearing.

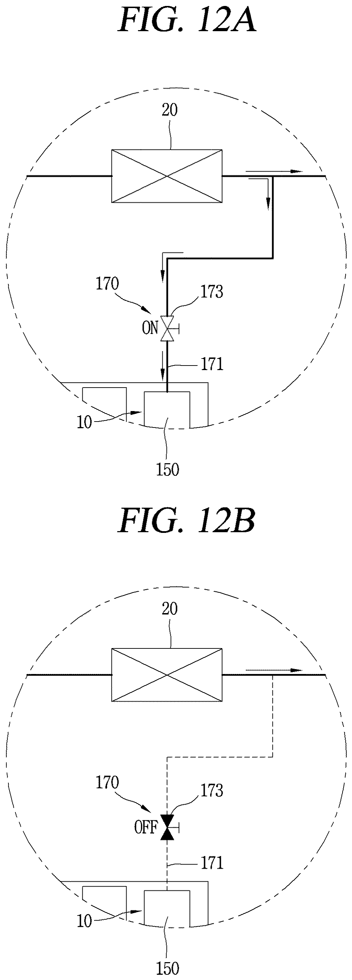

FIGS. 12A and 12B are schematic views illustrating an operation of the axial bearing according to an operation state in the turbo compressor according to this embodiment.

For example, the refrigerant control valve 173 is controlled to be open at an early stage of an operation of the refrigeration cycle apparatus 1 and/or the compressor 10 (this is the same as an overload condition) as shown in FIG. 12A.

Then, a portion of the high-temperature and high-pressure refrigerant passing through the condenser 20 flows into the refrigerant supply path 172 through the refrigerant supply pipe 171 as the refrigerant supply pipe 171 connecting between the exit of the condenser 20 and an entrance of the refrigerant supply path 172 is open, and the refrigerant is supplied to the first internal path 145a and the second internal path 147a respectively through refrigerant connection holes 143d and 1115b and refrigerant injection holes 1451c and 1471c.

Then, the refrigerant of the first internal path 145a and the second internal path 147a is sprayed toward the first side surface 1324a and the second side surface 1324b respectively through the first orifice 1451d and the second orifice 1471d, to form a static pressure on each of axial bearing surfaces BS1 and BS2.

Then, even before dynamic pressures of the first dynamic pressure bearing portion 146 and the second dynamic pressure bearing portion 148 are sufficiently formed at an early stage of an operation, the rotary shaft 130 can be smoothly supported in the axial direction by means of static pressures generated by the first static pressure bearing portion 145 and the second static pressure bearing portion 147. Even when the bearing power of the above-described dynamic powers is not sufficient due to an overload operation, the static pressures generated by the first static pressure bearing portion 145 and the second static pressure bearing portion 147 are added in addition to the dynamic pressures, so that the rotary shaft 130 can be smoothly supported in the axial direction. Accordingly, friction loss between the thrust runner 1324 and the first axial bearing (i.e., the first dynamic pressure bearing portion) 141b and/or the second axial bearing (i.e., the second dynamic pressure bearing portion) 141c, which are in contact with the thrust runner 1324 at an early stage of an operation and/or during an overload operation can be suppressed.

On the other hand, the refrigerant control valve 173 is controlled to be closed during a normal operation and/or a low load operation of the compressor 10 as shown in FIG. 12B.

Then, as the refrigerant supply pipe 171 connecting between the exit of the condenser 20 and the entrance of the refrigerant supply path 172 is closed, the high-temperature and high-pressure refrigerant passing through the condenser 20 is not guided to the refrigerant supply pipe 171 but flows into the refrigerant circulation pipe 1a toward the expander 30.

Then, the first static pressure bearing portion 145 constituting the first axial bearing 141b and the second static pressure bearing portion 147 constituting the second axial bearing 141c do not operate. Instead, a dynamic pressure generated while the rotary shaft 130 rotates at high speed is formed on the first axial bearing surface BS1 and the second axial bearing surface BS2.

Then, although the first static pressure bearing portion 145 and the second static pressure bearing portion 147 do not operate during a normal operation, the rotary shaft 130 can be smoothly supported in the axial direction, only using the first dynamic pressure bearing portion 146 and the second dynamic pressure bearing portion 148. This is the same even during a low load operation. In other words, the rotary shaft 130 can be smoothly supported in the axial direction, only using the first dynamic pressure bearing portion 146 and the second dynamic pressure bearing portion 148, even during a low load operation. Accordingly, the refrigerant passing through the condenser 20 during a normal operation and/or a low load operation is not unnecessarily bypassed to the refrigerant supply unit 170 but normally circulated in the refrigeration cycle apparatus 1, so that the performance of the compressor 10 and the cooling power of the refrigeration cycle apparatus 1 having the same can be improved.

Meanwhile, a case where another embodiment of the axial bearing exits is as follows.

That is, the dynamic pressure bearing portion is located inwardly of the static pressure bearing portion in the above-described embodiment, but the static pressure bearing portion may be located inwardly of the dynamic pressure bearing portion in some cases. Hereinafter, the first axial bearing is described as a representative example, and description of the second axial bearing is omitted since a basic configuration and an operation effect according thereto in the second axial bearing are identical to those in the first axial bearing except only different installation positions of the first axial bearing and the second axial bearing.

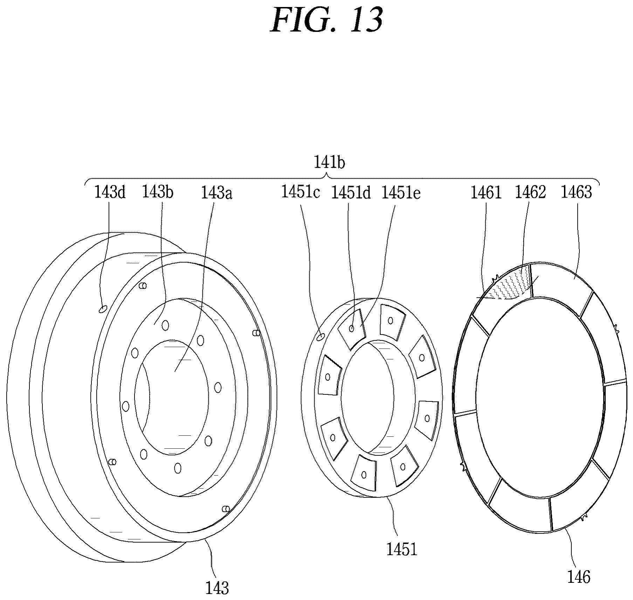

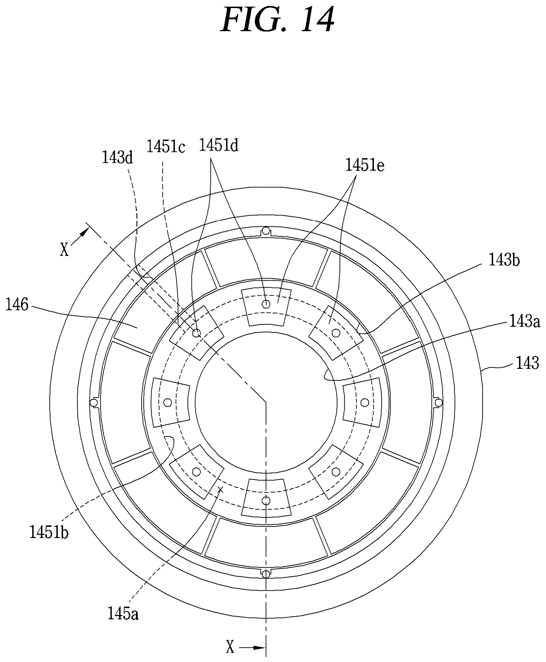

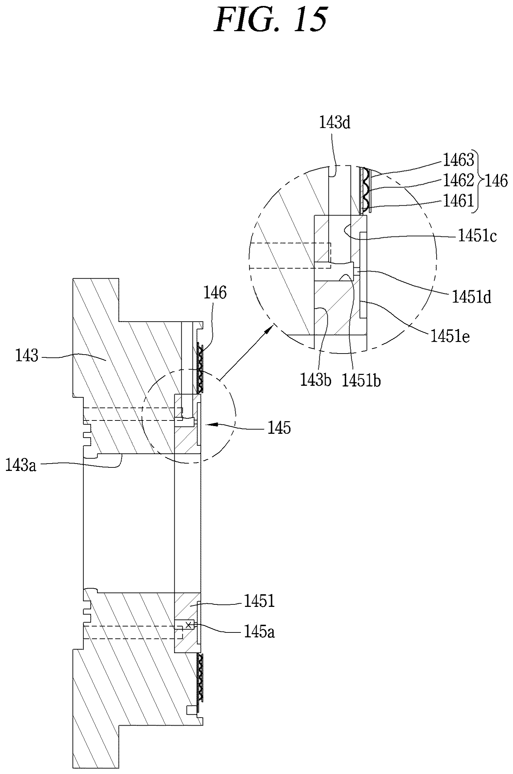

FIG. 13 is an exploded perspective view showing another embodiment of the axial bearing. FIG. 14 is an assembled plan view showing the axial bearing according to FIG. 13. FIG. 15 is a cross-sectional view taken along line "X-X" of FIG. 14.

Referring to FIGS. 13 to 15, a first axial bearing 141b may include a first static pressure bearing portion 145 and a first dynamic pressure bearing portion 146, which are arranged on a first bearing shell 143. For example, the first bearing shell 143 may be fixed to the housing 110, the first static pressure bearing portion 145 may include a first bearing plate 1451 coupled to the first bearing shell 143, and the first dynamic pressure bearing portion 146 may be configured as a foil bearing including a first foil plate 1461 coupled to the first bearing plate 1451. A basic configuration and an operation effect according thereto in the first static pressure bearing portion 145 and the first dynamic pressure bearing portion 146 are almost similar to those of the above-described embodiment, and therefore, detailed description of the first static pressure bearing portion 145 and the first dynamic pressure bearing portion 146 is replaced with the description of the above-described embodiment.

In addition, a refrigerant supply unit 170 supplying the refrigerant to the first static pressure bearing portion 145 and the first dynamic pressure bearing portion 146 is also almost similar to that of the above-described embodiment, and therefore, detailed description of the refrigerant supply unit is replaced with the description of the above-described embodiment.

However, in this embodiment, a first bearing accommodation groove 143b may be formed in a first side surface of the first bearing shell 143, which faces the first side surface 1324a of the thrust runner 1324. The first bearing accommodation groove 143b may be formed in an outer circumferential side of the first bearing shell 143. In other words, a first orifice 1451d forming a portion of the first static pressure bearing portion 145 may be formed inwardly of the first foil plate 1461 constituting the first dynamic pressure bearing portion 146. Therefore, the first static pressure bearing portion 145 may be arranged at an inner circumferential side on the first side surface of the first bearing shell 143, which faces the first side surface 1324a of the thrust runner 1324, and the first dynamic pressure bearing portion 146 may be arranged at an outer circumferential side on the first side surface of the first bearing shell 143.

In addition, as described above, a second static pressure bearing portion 147 may be arranged at an inner circumferential side on a first side surface of a bearing support portion 1115, which faces the second side surface 1324b of the thrust runner 1324, and a second dynamic pressure bearing portion 148 may be arranged at an outer circumferential side on the first side surface of the bearing support portion 1115.

When the dynamic pressure bearing portions 146 and 148 are located outwardly of the static pressure bearing portions 145 and 147 as described above, the static pressure bearing portions 145 and 147 may not operate during a normal operation and/or a low load operation of the refrigeration cycle apparatus 1 and/or the compressor 10. When only the dynamic pressure bearing portions 146 and 148 operate, the support area of the dynamic pressure bearing portions 146 and 148 may be enlarged. Accordingly, the rotary shaft 130 can be smoothly supported in the axial direction, using only the dynamic pressure bearing portions 146 and 148 except the static pressure bearing portions 145 and 147.

Although not shown in the drawings, the first static pressure bearing portion 145 and the second static pressure bearing portion 147 may be located at opposite sides of the dynamic pressure bearing portions 146 and 148, respectively. For example, the first static pressure bearing portion 145 may be located outside the first dynamic pressure bearing portion 146, and the second static pressure bearing portion 147 may be located inside the second dynamic pressure bearing portion 148. Also, the first static pressure bearing portion 145 may be located inside the first dynamic pressure bearing portion 146, and the second static pressure bearing portion 147 may be located outside the second dynamic pressure bearing portion 148. In these cases, the effect in the above-described embodiment can be expected.

Meanwhile, a case where still another embodiment of the axial bearing exists is as follows.

That is, the bearing plate constituting the static pressure bearing portion is formed as a single body in the above-described embodiments. In some cases, the bearing plate may be divided into a plurality of members to be rotatably coupled to each other. Hereinafter, the first axial bearing is described as a representative example, and description of the second axial bearing is omitted since a basic configuration and an operation effect according thereto in the second axial bearing are identical to those in the first axial bearing except only different installation positions of the first axial bearing and the second axial bearing.

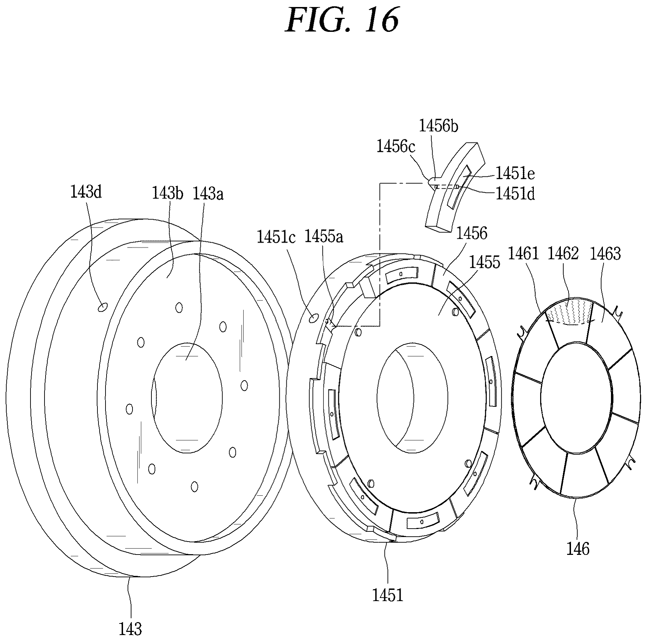

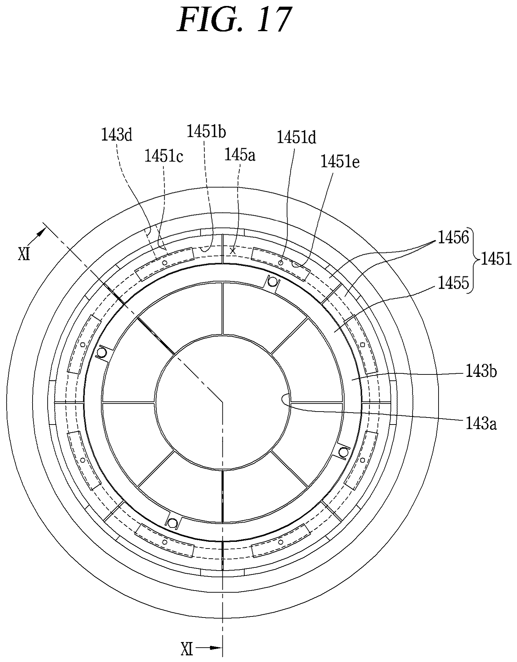

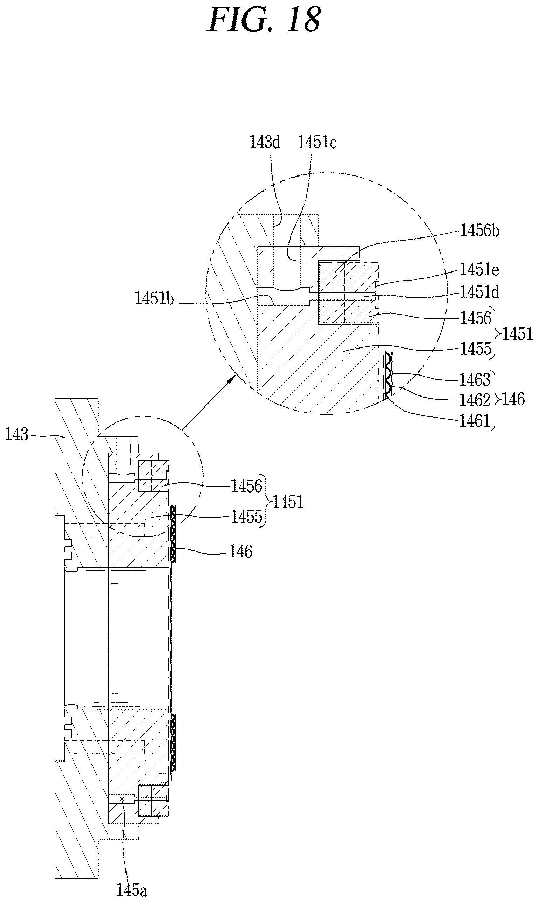

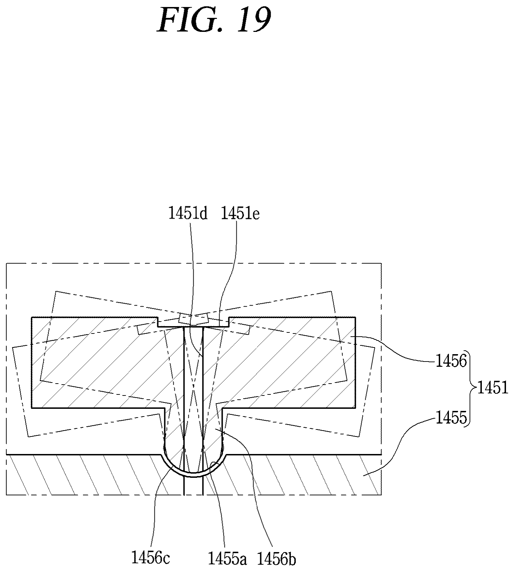

FIG. 16 is an exploded perspective view showing still another embodiment of the axial bearing. FIG. 17 is an assembled plan view showing the axial bearing according to FIG. 16. FIG. 18 is a cross-sectional view taken along line "XI-XI" of FIG. 17. FIG. 19 is a schematic view showing illustrating an operation of a tilting pad in FIG. 18.

Referring to FIGS. 16 to 19, a first axial bearing 141b may include a first static pressure bearing portion 145 and a first dynamic pressure bearing portion 146, which are arranged on a first bearing shell 143. For example, the first bearing shell 143 may be fixed to the housing 110, the first static pressure bearing portion 145 may include a first bearing plate 1451 coupled to the first bearing shell 143, and the first dynamic pressure bearing portion 146 may be configured as a foil bearing including a first foil plate 1461 coupled to the first bearing plate 1451. A basic configuration and an operation effect according thereto in the first static pressure bearing portion 145 and the first dynamic pressure bearing portion 146 are almost similar to those of the above-described embodiment, and therefore, detailed description of the first static pressure bearing portion 145 and the first dynamic pressure bearing portion 146 is replaced with the description of the above-described embodiment.

In addition, a refrigerant supply unit 170 supplying the refrigerant to the first static pressure bearing portion 145 and the first dynamic pressure bearing portion 146 is also almost similar to that of the above-described embodiment, and therefore, detailed description of the refrigerant supply unit is replaced with the description of the above-described embodiment.

However, unlike the above-described embodiments, in this embodiment, the first bearing plate 1451 may be formed tiltable in the circumferential direction. For example, the first bearing plate 1451 may include a first tilting plate 1455 and a plurality of first tilting pads 1456. Accordingly, although the thrust runner 1324 and the first bearing plate 1451 are in contact with each other, the first tilting pads 1456 constituting the first bearing plate 1451 rotate with respect to the first tilting plate 1455, so that friction loss between the thrust runner 1324 and the first bearing plate 1451 can be suppressed.

The first tilting plate 1455 may be fixed to the first bearing shell 143, and the plurality of tilting pads 1456 may be rotatably coupled to the first tilting plate 1455. For example, as shown in FIGS. 18 and 19, the first tilting pad 1456 may include a first pad portion 1456a and a first pivot portion 1456b, the first pad portion 1456a may be formed in an arc plate shape while facing the first side surface 1324a of the thrust runner 1324, and the first pivot portion 1456b may extend toward the first tilting plate 1455 from the first pad portion 1456a. Accordingly, the first pad portion 1456a is inclined while rotating with respect to the first pivot portion 1456b, so that friction loss between the first side surface 1324a of the thrust runner 1324 and a first side surface of the first bearing plate 1451, which faces the first side surface 1324a of the thrust runner 1324 can be suppressed.

In this case, a first orifice 1451d may formed by continuously passing through the first tilting plate 1455 and the first tilting pad 1456. For example, a first orifice hole 1451c1 may be formed in the first tilting plate 1455, and a second orifice hole 1451c2 communicating the first orifice hole 1451c1 may be formed in the first tilting pad 1456. In this case, the second orifice hole 1451c2 may be formed by passing through an end surface of the first pivot portion 1456b toward a first side surface of the first pad portion 1456a. Accordingly, as the first tilting pad 1456 is rotatably coupled to the first tilting plate 1455, the first orifice 1451d can continuously communicate with a first internal path 145a formed between the first bearing shell 143 and the first tilting plate 1455.

In addition, as shown in FIG. 19, a first pivot projection 1456c may be formed at an end portion of the first pivot portion 1456b, and a first pivot groove 1455a into which the first pivot projection 1456c is rotatably inserted may be formed in a first side surface of the first tilting plate 1455. The first pivot projection 1456c and the first pivot groove 1455a may be formed long in the radial direction or may be formed in a spherical shape. In this embodiment, an example is illustrated in which the first pivot projection 1456c and the first pivot groove 1455a are formed long in the radial direction. Accordingly, as the first pivot portion 1456b more smoothly rotates with respect to the first tilting plate 1455, the friction loss between the thrust runner 1324 and the first bearing plate 1451 can be further reduced.

Although not shown in the drawings, the end portion of the first pivot portion 1456b may extend as a single body to the first tilting plate 1455. In this case, it is unnecessary that a plurality of first pivot portions 1456b should be individually assembled to the first tilting plate 1451, and thus the first static pressure bearing portion 145 can be easily manufactured.

When the first bearing plate 1451 is rotatably formed with respect to the first bearing shell 143 as described above, the first tilting pad 1456 forming a portion of the first bearing plate 1451 is inclined while rotating in the circumferential direction with respect to the first tilting plate 1451, and therefore, a so-called fluid dynamic pressure effect is generated. Then, the friction loss between the first side surface 1324a of the thrust runner 1324 and the first side surface of the first bearing plate 1451, which faces the first side surface 1324a of the thrust runner 1324 can be effectively suppressed.

Although not shown in the drawings, one of bearing plates 1451 and 1471 constituting the first static pressure bearing portion 145 and a second static pressure bearing portion may be formed as a single body, and the other bearing plate may be divided into a plurality of members to be rotatably coupled to each other. Description of effects according thereto is replaced with the description of the above-described embodiments.

Meanwhile, a case where still another embodiment of the axial bearing exists is as follows.

That is, in the above-described embodiments, the refrigerant supply pipe constituting the refrigerant supply unit is connected directly to the refrigerant supply path from the exit of the condenser. In some cases, a refrigerant storage container may be further arranged in the middle of the refrigerant supply pipe.

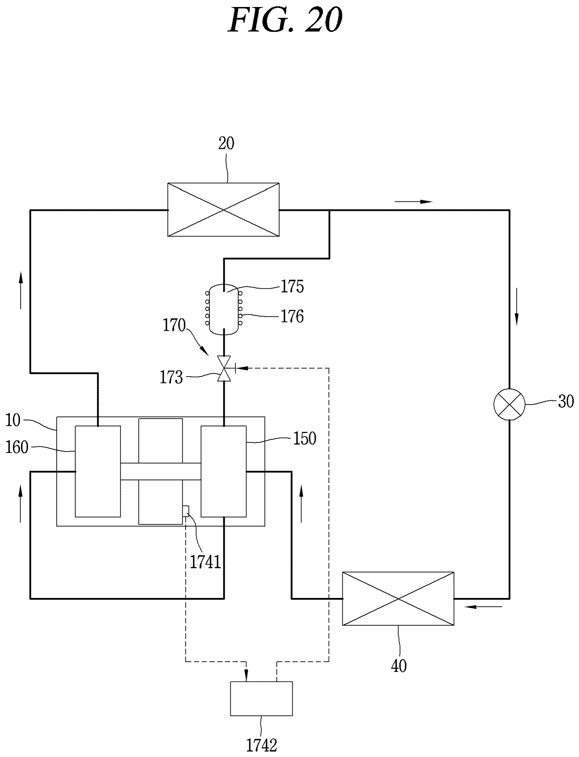

FIG. 20 is a system diagram showing another embodiment of the refrigeration cycle apparatus including the turbo compressor.

Referring to FIG. 20, an axial bearing according to this embodiment may include static pressure bearing portions 145 and 147 and dynamic pressure bearing portions 146 and 148, and the static pressure bearing portions 145 and 147 and/or the dynamic pressure bearing portions 146 and 148 may communicate with an exit of a condenser 20 through a refrigerant supply unit 170. For example, the refrigerant supply unit 170 may include a refrigerant supply pipe 171, a refrigerant supply path 172, a refrigerant control valve 173, and a valve control unit 174, and the refrigerant supply pipe 171, the refrigerant supply path 172, the refrigerant control valve 173, and the valve control unit 174 are identical or almost similar to those of the above-described embodiments, and therefore, detailed description of the refrigerant supply pipe 171, the refrigerant supply path 172, the refrigerant control valve 173, and the valve control unit 174 is replaced with the descriptions of the above-described embodiments.

However, in this embodiment, a refrigerant storage container 175 may be connected to the refrigerant supply pipe 171 in the middle of the refrigerant supply pipe 171. In other words, the refrigerant storage container 175 may be located between the exit of the condenser 20 and the refrigerant supply path 172, and the above-described refrigerant control valve 173 may be located at an exit of the refrigerant storage container 175 connected to the refrigerant supply path 172. Therefore, according to opening/closing of the refrigerant control valve 173, a refrigerant discharged from the condenser 20 may be stored in the refrigerant storage container 175, or the refrigerant stored in the refrigerant storage container 175 may be quickly supplied to a first internal path 145a and/or a second internal path 147a through the refrigerant supply pipe 171.

In this case, a refrigerant heating member 176 may be arranged on an outer circumferential surface of the refrigerant storage container 175. For example, the refrigerant heating member 176 may be installed while winding the outer circumferential surface of the refrigerant storage container 175 plural times. The refrigerant heating member 176 may be configured as a refrigerant circulation pipe 1a connected to a discharge side of a compressor 10 or may be configured as a heat line from which heat is generated by a separate heat source. In this embodiment, an example is illustrated in which the refrigerant heating member 176 is configured as a separate heat line. Accordingly, the refrigerant stored in the refrigerant storage container 175 can maintain an appropriate pressure while being heated by an appropriate temperature by the refrigerant heating member 175.

When the refrigerant storage container 175 opened/closed by the refrigerant control valve 173 is arranged in the middle of the refrigerant supply pipe 171 as described above, the refrigerant may be stored in the refrigerant storage container 175 or the storage refrigerant may be quickly supplied to the internal paths 145a and 147a according to an operation condition.

For example, as the refrigerant control valve 173 is open at an early stage of an operation of the refrigeration cycle apparatus 1 and/or the compressor 10 and/or in an overload operation condition, the refrigerant stored in the refrigerant storage container 175 along with the refrigerant discharged through the exit of the condenser 20 is quickly supplied to the first internal path 145a and/or the second internal path 147a.

As the refrigerant heating member 176 is arranged on the outer circumferential surface of the refrigerant storage container 175, the refrigerant stored in the refrigerant storage container 175 can maintain an appropriate temperature and an appropriate pressure. Then, the refrigerant stored in the refrigerant storage container 175 is quickly supplied to the first internal path 145a and/or the second internal path 147a in a state in which the refrigerant maintains a high pressure at an early stage of an operation and/or during an overload operation, so that the static pressure effect of the static pressure bearing portions 145 and 147 can be improved.

On the other hand, as the refrigerant control valve 173 is closed during a normal operation of the refrigeration cycle apparatus 1 and/or the compressor 10 and/or a low load operation condition, a portion of the refrigerant discharged through the exit of the condenser 20 is stored in the refrigerant storage container 175. Then, the refrigerant is not supplied to the first internal path 145a and/or the second internal path 147a.

In this case, as the refrigerant heating member 176 is arranged on the outer circumferential surface of the refrigerant storage container 175, the refrigerant stored in the refrigerant storage container 175 can also maintain an appropriate temperature and an appropriate pressure. Then, the refrigerant stored in the refrigerant storage container 175 is quickly supplied to the first internal path 145a and/or the second internal path 147a in a state in which the refrigerant maintains a high pressure during restart of the refrigeration cycle apparatus 1 and/or the compressor 10, so that the static pressure effect of the static pressure bearing portions 145 and 147 can be improved.

## Claims

1. An axial bearing comprising:
a bearing support member spaced apart from at least one of both axial side surfaces of a thrust runner arranged on a rotary shaft;
a bearing plate arranged on the bearing support member to face the side surface of the thrust runner in an axial direction and comprising at least one orifice through which a fluid is sprayed toward the side surface of the thrust runner to support the rotary shaft in the axial direction; and
at least one foil arranged on the bearing support member or the bearing plate to face the side surface of the thrust runner in the axial direction and supporting the rotary shaft in the axial direction by means of a dynamic pressure generated in rotation of the rotary shaft,
wherein the orifice is located outwardly or inwardly of the foil in a radial direction.

2. The axial bearing of claim 1, wherein a foil accommodation groove having the foil accommodated therein is formed in an annular shape in a side surface of the bearing plate facing the thrust runner, and a bearing accommodation groove having the bearing plate accommodated therein is formed in an annular shape in the bearing support member, and
wherein the foil accommodation groove is formed in at least one of an inner circumferential side and an outer circumferential side of the bearing accommodation groove.

3. The axial bearing of claim 1, wherein a bearing accommodation groove having the bearing plate accommodated therein is formed in an annular shape in the bearing support member, and
wherein a fluid flow path groove forming an internal path along with the bearing accommodation groove is formed in an annular shape in at least one of a side surface of the bearing support member and a side surface of the bearing plate, which faces the side surface of the bearing support member.

4. The axial bearing of claim 3, wherein a fluid connection hole passing through an inner circumferential surface of the bearing accommodation groove from an outer circumferential surface of the bearing support member is formed in the bearing support member,
wherein a fluid injection hole passing through an inner circumferential surface of the fluid flow path groove from an outer circumferential surface of the bearing plate is formed in the bearing plate, and
wherein the fluid connection hole and the fluid injection hole communicate with each other.

5. The axial bearing of claim 4, wherein a total cross-sectional area of the fluid injection hole is formed larger than or equal to a total cross-sectional area of the orifice.

6. The axial bearing of claim 1, wherein an annular internal path through which a fluid supplied from an outside is circulated is formed between the bearing support member and the bearing plate, and
wherein the orifice passes through the internal path in the axial direction toward the thrust runner.

7. The axial bearing of claim 6, wherein the orifice is provided in plurality at a predetermined interval along a circumferential direction, and
wherein the plurality of orifices are formed at equidistant intervals along the circumferential direction.

8. The axial bearing of claim 6, wherein the orifice is provided in plurality at a predetermined interval along a circumferential direction, and
wherein the plurality of orifices are formed to have a same cross-sectional area along the circumferential direction.

9. The axial bearing of claim 1, wherein at least one orifice accommodation groove accommodating the orifice and recessed by a predetermined depth is formed in a side surface of the bearing plate facing the thrust runner.

10. The axial bearing of claim 9, wherein the orifice is formed in a geometric center of the orifice accommodation groove.

11. The axial bearing of claim 9, wherein the orifice accommodation groove is provided in plurality at a predetermined interval along a circumferential direction, and
wherein the plurality of orifice accommodation grooves adjacent to each other in the circumferential direction are separated from each other.

12. The axial bearing of claim 9, wherein the orifice accommodation groove is formed in plurality at a predetermined interval along a circumferential direction, and
wherein communication grooves through which the plurality of orifice accommodation grooves adjacent to each other in the circumferential direction communicate with each other are formed between the orifice accommodation grooves, respectively.

13. The axial bearing of claim 9, wherein the orifice accommodation groove extends along a circumferential direction to be formed in an annular shape.

14. The axial bearing of any one of claims 1 to 13, wherein the bearing plate is formed as a single body.

15. The axial bearing of any one of claims 1 to 13, wherein the bearing plate comprises:
an annular tilting plate; and
a plurality of tilting pads arranged along a circumferential direction on the tilting plate to be rotatable with respect to the tilting plate.

16. The axial bearing of claim 15, wherein the tilting pad comprises:
a pad portion facing the thrust runner of the rotary shaft; and
a pivot portion extending toward the bearing plate from the pad portion and forming a rotation center of the pad portion.

17. The axial bearing of claim 16, wherein the orifice is formed by passing through the pivot portion in the axial direction.

18. A turbo compressor comprising:
a housing comprising a motor chamber;
a driving motor arranged in the motor chamber of the housing to generate a rotational force;
a rotary shaft transferring the rotational force of the driving motor;
an impeller coupled to the rotary shaft to suck and compress a refrigerant while rotating;
a thrust runner extending from an outer circumferential surface of the rotary shaft; and
an axial bearing arranged on one axial side of the thrust runner to support the thrust runner in an axial direction,
wherein the axial bearing comprises:
a static pressure bearing portion arranged to face the thrust runner of the rotary shaft and supporting the rotary shaft in the axial direction by means of a static pressure by spraying the refrigerant toward the thrust runner; and
a dynamic pressure bearing portion arranged on at least one of an inner circumferential side and an outer circumferential side of the static pressure bearing portion to face the thrust runner and supporting the rotary shaft in the axial direction by means of a dynamic pressure generated in rotation of the rotary shaft.

19. The turbo compressor of claim 18, wherein the static pressure bearing portion comprises:
a bearing support member fixed to the housing; and
a bearing plate arranged on one side surface of the bearing support member facing the thrust runner of the rotary shaft, and
wherein at least one orifice is formed in the bearing plate such that the refrigerant supplied through an internal path located between the bearing plate and the bearing support member is sprayed toward the thrust runner.

20. The turbo compressor of claim 18, wherein the dynamic pressure bearing portion is arranged on one radial side surface of the static pressure bearing portion facing the thrust runner of the rotary shaft.

21. A refrigeration cycle apparatus comprising:
a compressor;
a condenser connected to a discharge side of the compressor;
an expander connected to an exit side of the condenser; and
an evaporator having an entrance connected to an exit side of the expander and an exit connected to a suction side of the compressor,
wherein the compressor comprises the turbo compressor of any one of claims 18 to 20.

22. The refrigeration cycle apparatus of claim 21, wherein a refrigerant supply unit guiding a refrigerant to the static pressure bearing portion is formed in the compressor, and
wherein the refrigerant supply unit is connected between an exit of the condenser and an entrance of the expander through a refrigerant supply pipe.

23. The refrigeration cycle apparatus of claim 22, wherein a refrigerant control valve opening/closing of the refrigerant supply pipe is arranged in the refrigerant supply pipe, and is electrically connected to a valve control unit controlling opening/closing of the refrigerant control valve, and
wherein the valve control unit opens the refrigerant supply pipe in a high load condition and blocks the refrigerant supply pipe in a low load condition.

24. The refrigeration cycle apparatus of claim 23, wherein a refrigerant storage container storing the refrigerant is arranged in the middle of the refrigerant supply pipe, and the refrigerant control valve is arranged at an exit of the refrigerant storage container connected to the refrigerant supply unit.

25. The refrigeration cycle apparatus of claim 24, wherein a refrigerant heating member is arranged on an outer circumferential surface of the refrigerant storage container to heat the refrigerant stored in the refrigerant storage container.
